# EUROPEAN PATENT APPLICATION

(11) **EP 4 492 261 A1**
(43) Date of publication of application: **15.01.2025**
(21) Application number: 24187845.3
(22) Date of filing: 10.07.2024
(51) Int. Cl.: G06F 16/901, G06N 5/022

(54) **APPARATUS AND METHOD FOR ALIGNING SCIENTIFIC INSTRUMENT METADATA TO A SEMANTIC MODEL**

(30) Priority: 11.07.2023 US 202363513076 P
(71) Applicant: Thermo Finnigan LLC, San Jose, CA 95134 (US)
(72) Inventor: RESSLER, Mark Raymond, San Jose, 95134 (US); ETLIN, David Jeffrey, San Jose, 95134 (US); KUMP, Matthew D, San Jose, 95134 (US); DESHPANDE, Sachin S, San Jose, 95134 (US)
(74) Representative: Boult Wade Tennant LLP

(57) **Abstract**

A scientific instrument support apparatus includes memory hardware configured to store instructions and processing hardware configured to execute the instructions. The instructions include processing metadata to identify extended attributes present in the metadata, loading one or more semantic models based on media type annotations in the metadata, querying the loaded one or more semantic models for corresponding extended attribute properties that match extended attribute properties in the metadata, and, in response to finding corresponding extended attribute properties in a selected semantic model, matching each extended attribute property in the metadata to one of the corresponding data properties in the selected semantic model, aligning each corresponding data property to a node on an output graph, generating relationships between nodes on the output graph based on object properties, testing relationships between nodes, removing erroneous relationships from the output graph, and transforming a graphical user interface to display the output graph.

## Description

### Technical Field

Various embodiments relate generally, but not exclusively, to scientific instruments and scientific instrument support apparatuses, such as data processing and analysis systems for data generated by scientific instruments.

### Summary

Scientific instruments include a complex arrangement of movable components, sensors, input and output ports, energy sources, and consumable components. Scientific instrument runs tend to generate vast quantities of data that need to be managed, interpreted, and analyzed by various scientific instrument support apparatuses. Because this data tends to be complex and comes from disparate sources (such as different scientific instruments and/or different sensors on each scientific instrument), metadata (such as additional data describing the scientific instrument data) plays a crucial role in organizing and understanding this scientific instrument data. For example, metadata can provide unique identifiers for individual instrument runs, making it possible to distinguish between different sets of data from different runs. This can be critical for tracking and organizing the outputs from a variety of different experiments. Metadata can also provide context about the conditions under which the data was collected. This could include information about the experimental setup, instrument settings, and/or the data and time of the run. This context can be beneficial to interpreting the data correctly. Metadata also aids in tracking the history and/or provenance of the data - for example, by tracking how the data was collected, which instruments were used, what software versions were used, which protocols were followed, and/or whether any post-collection data processing was performed. This context can assist with quality control and validation of experimental data.

If data from different scientific instruments and/or different experimental runs needs to be integrated, metadata can provide the necessary context to align or combine the data., metadata can help make individual or groups of data points discoverable - and thus relevant and/or reusable to other researchers. Metadata can also be used to track data quality from individual instruments - such as by tracking the precision, accuracy, and/or calibration of instruments. This can help users track anomalies with instruments and/or data generated by instruments. However, because data sets from scientific instruments are often highly complex, raw metadata is often difficult to understand. Transforming metadata into a knowledge graph offers a variety of advantages that can help users better understand the metadata. For example, raw metadata may be generated as a raw unformatted text or formatted text - such as in a JavaScript Object Notation (JSON) format. However, even when formatted, metadata tends to be dense and difficult for users to quickly process. By transforming metadata into a visual representation in the form of a knowledge graph, users can quickly and intuitively see a visual representation between the various components present in the metadata. This can make it much easier to comprehend the metadata, particularly when dealing with complex and interrelated information (such a metadata related to scientific instruments and associated experimental runs).

Knowledge graphs can also show the connections between different components of metadata that might not be apparent from a traditional textual data view. This can help users integrate and understand the links between different data sources, so users can perform more comprehensive analysis and more effectively integrate and/or fuse data from the different sources. Furthermore, knowledge graphs can emphasize the meaning or semantics behind components of the metadata. Presenting metadata as knowledge graphs can help users gain a deeper comprehension by contextualizing the metadata and presenting it in a more natural and intuitive way. Knowledge graphs can also scale well with large volumes of metadata and are flexible enough to integrate new types of metadata and/or changes in the existing metadata schema. Knowledge graphs can also support more sophisticated types of analyses - such as inference and prediction - by using the relationships between elements of the graph. This helps users understand not only the current state of the metadata, but also predict future states and infer hidden patterns in the data. Finally, knowledge graphs may be presented in standardized formats and languages, such as the Resource Description Framework (RDF) and the Web Ontology Language (OWL). Thus, transforming metadata into knowledge graphs helps users transfer the information contained in the metadata between different platforms, increasing the interoperability of scientific instruments and scientific instrument support systems.

However, there are a variety of technical challenges present when transforming metadata - even formatted metadata (such as JSON files) - into knowledge graphs. For example, unlike databases that have a well-defined schema, JSON documents can be highly variable and unstructured. This can make it difficult to map JSON metadata to a knowledge graph (as there might not be a standardized way to interpret and convert the metadata). JSON data can also contain complex hierarchies with nested arrays and objects. This complexity is difficult to translate directly into a knowledge graph model - since knowledge graph models typically assume binary relationships. Knowledge graphs are also built on semantic understandings and relationships between data. However, JSON metadata doesn't inherently carry this semantic information and relationships. Mapping JSON metadata to a knowledge graph requires that this information be inferred and generated. Furthermore, JSON metadata may contain errors, duplicates, inconsistencies, and/or missing values. These data quality issues can complicate the transformation process and - if uncorrected - reduce the quality of any resulting knowledge graph. What is needed are techniques that can automatically effectively infer relationships between elements (even in non-standard and low-quality metadata files) to effectively and accurately transform the metadata into knowledge graphs. By addressing these challenges, such techniques form powerful tools for helping users make sense of vast quantities of complex and interconnected data generated by a variety of scientific instruments.

In some embodiments, a scientific instrument support apparatus includes memory hardware configured to store instructions and processing hardware configured to execute the instructions. The instructions include processing metadata to identify extended attributes present in the metadata, loading one or more semantic models based on media type annotations in the metadata, and querying the loaded one or more semantic models for corresponding extended attribute properties that match extended attribute properties in the metadata. The instructions include, in response to finding corresponding extended attribute properties in a selected semantic model of the one or more semantic models, matching each extended attribute property in the metadata to one of one or more corresponding data properties in the selected semantic model, aligning each corresponding data property to a node on an output graph, generating relationships between nodes on the output graph based on object properties in the selected semantic model, testing relationships between nodes on the output graph, removing erroneous relationships from the output graph, and transforming a graphical user interface to display the output graph to a user.

In other features, the instructions include, in response to not finding matching extended attribute properties in the metadata, predicting a most likely semantic model from the one or more semantic models and matching each extended attribute property in the metadata to a probable data property in the most likely semantic model. In other features, predicting the most likely semantic model from the one or more semantic models includes computing a distance between extended attribute properties in the metadata and extended attribute properties in each of the one or more semantic models, computing a total match score for each of the one or more semantic models based on the computed distances, and selecting a semantic model having a highest total match score as the most likely semantic model.

In other features, matching each extended attribute property in the metadata to the probable data property in the most likely semantic model includes determining whether the extended attribute property in the metadata and a probable extended attribute property in the most likely semantic model have a match score above a threshold and, in response to determining that the match between the extended attribute property in the metadata and the probable extended attribute property in the most likely semantic model is above the threshold, matching the extended attribute property in the metadata with the probable extended attribute property in the most likely semantic model.

In other features, matching each extended attribute property in the metadata to one of the corresponding data properties in the selected semantic model includes selecting a data property in the selected semantic model, selecting an extended attribute property from the semantic model based on the selected data property, determining whether a value of the selected extended attribute property is present in the metadata, and, in response to determining the value of the selected extended attribute property is present in the metadata, adding the selected data property and an associated extended attribute property from the metadata that corresponds to the value of the selected extended attribute property to an array.

In other features, aligning each corresponding data property to the node on an output graph includes selecting a data property and associated extended attribute property combination from the array and generating the node on the output graph representing the selected data property and extended attribute property combination. In other features, generating relationships between nodes on the output graph based on object properties in the selected semantic model includes selecting a first node on the output graph, selecting a domain from the semantic model corresponding to the selected node, selecting an object property and a range associated with the domain, checking whether a second node corresponding to the selected range exists, and, in response to determining that the second node exists, generating a link on the output graph extending from the first node to the second node based on the selected object property.

In other features, generating relationships between nodes on the output graph based on object properties in the semantic model includes, in response to determining that the second node does not exist, generating the second node on the output graph based on the range. In other features, testing relationships between nodes on the output graph includes selecting a test node on the output graph, determining whether removal of the selected test node would leave any other nodes on the output graph disconnected, and, in response to determining that removal of the selected test node would not leave any other nodes on the output graph disconnected, marking the selected test node as erroneous. In other features, removing erroneous relationships from the output graph includes removing test nodes marked as erroneous from the output graph.

In other features, the instructions include generating data triples based on extended attribute properties in the metadata and corresponding data properties in the selected semantic model and generating nodes and links on the output graph based on the data triples. In other features, each data triple includes a subject, a predicate, and an object, a domain node is generated based on the subject, a range node is generated based on the object, and a link extending from the domain node to the range node is generated based on the predicate.

In some examples, a computer-implemented method for scientific instrument support includes processing metadata to identify extended attributes present in the metadata, loading one or more semantic models based on media type annotations in the metadata, and querying the loaded one or more semantic models for corresponding extended attribute properties that match extended attribute properties in the metadata. The method includes, in response to finding corresponding extended attribute properties in a selected semantic model of the one or more semantic models, matching each extended attribute property in the metadata to one of one or more corresponding data properties in the selected semantic model, aligning each corresponding data property to a node on an output graph, generating relationships between nodes on the output graph based on object properties in the selected semantic model, testing relationships between nodes on the output graph, removing erroneous relationships from the output graph, and transforming a graphical user interface to display the output graph to a user.

In other features, the method includes, in response to not finding matching extended attribute properties in the metadata, predicting a most likely semantic model from the one or more semantic models and matching each extended attribute property in the metadata to a probable data property in the most likely semantic model. In other features, predicting the most likely semantic model from the one or more semantic models includes computing a distance between extended attribute properties in the metadata and extended attribute properties in each of the one or more semantic models, computing a total match score for each of the one or more semantic models based on the computed distances, and selecting a semantic model having a highest total match score as the most likely semantic model.

In other features, matching each extended attribute property in the metadata to the probable data property in the most likely semantic model includes determining whether the extended attribute property in the metadata and a probable extended attribute property in the most likely semantic model have a match score above a threshold and, in response to determining that the match between the extended attribute property in the metadata and the probable extended attribute property in the most likely semantic model is above the threshold, matching the extended attribute property in the metadata with the probable extended attribute property in the most likely semantic model.

In other features, matching each extended attribute property in the metadata to one of the corresponding data properties in the selected semantic model includes selecting a data property in the selected semantic model, selecting an extended attribute property from the semantic model based on the selected data property, determining whether a value of the selected extended attribute property is present in the metadata, and, in response to determining the value of the selected extended attribute property is present in the metadata, adding the selected data property and an associated extended attribute property from the metadata that corresponds to the value of the selected extended attribute property to an array.

In other features, aligning each corresponding data property to the node on an output graph includes selecting a data property and associated extended attribute property combination from the array and generating the node on the output graph representing the selected data property and extended attribute property combination. In other features, generating relationships between nodes on the output graph based on object properties in the selected semantic model includes selecting a first node on the output graph, selecting a domain from the semantic model corresponding to the selected node, selecting an object property and a range associated with the domain, checking whether a second node corresponding to the selected range exists, and, in response to determining that the second node exists, generating a link on the output graph extending from the first node to the second node based on the selected object property.

In other features, generating relationships between nodes on the output graph based on object properties in the semantic model includes, in response to determining that the second node does not exist, generating the second node on the output graph based on the range. In other features, testing relationships between nodes on the output graph includes selecting a test node on the output graph, determining whether removal of the selected test node would leave any other nodes on the output graph disconnected, and, in response to determining that removal of the selected test node would not leave any other nodes on the output graph disconnected, marking the selected test node as erroneous.

In other features, removing erroneous relationships from the output graph includes removing test nodes marked as erroneous from the output graph. In other features, the method includes generating data triples based on extended attribute properties in the metadata and corresponding data properties in the selected semantic model and generating nodes and links on the output graph based on the data triples. In other features, each data triple includes a subject, a predicate, and an object, a domain node is generated based on the subject, a range node is generated based on the object, and a link extending from the domain node to the range node is generated based on the predicate. In other features, one or more non-transitory computer-readable media have instructions thereon that, when executed by one or more processing devices of a scientific instrument support apparatus, cause the scientific instrument support apparatus to perform the method.

In some examples, one or more non-transitory computer-readable media having instructions that, when executed by one or more processors, cause the one or more processors to perform the following steps including: processing metadata to identify extended attributes present in the metadata, loading one or more semantic models based on media type annotations in the metadata, querying the loaded one or more semantic models for corresponding extended attribute properties that match extended attribute properties in the metadata, in response to finding corresponding extended attribute properties in a selected semantic model of the one or more semantic models: matching each extended attribute property in the metadata to one of one or more corresponding data properties in the selected semantic model, aligning each corresponding data property to a node on an output graph, generating relationships between nodes on the output graph based on object properties in the selected semantic model, testing relationships between nodes on the output graph, removing erroneous relationships from the output graph, and transforming a graphical user interface to display the output graph to a user.

### Brief Description of the Drawings

Embodiments will be readily understood by the following detailed description in conjunction with the accompanying drawings. To facilitate this description, like reference numerals designate like structural elements. Embodiments are illustrated by way of example, not by way of limitation, in the figures of the accompanying drawings.
FIG. 1 is a block diagram of an example scientific instrument support module for performing support operations, in accordance with various embodiments.
FIG. 2 is a block diagram showing example data objects that can be generated and/or used by logic elements of a scientific instrument support module.
FIGS. 3A-3C are flowcharts of an example process for automatically processing metadata - such as metadata generated by scientific instruments - to generate knowledge graphs.
FIG. 4 is a flowchart of an example process for matching extended attribute properties from metadata to data properties in a semantic model.
FIGS. 5A-5B are flowcharts of an example process for aligning matched data properties to nodes on an output knowledge graph.
FIG. 6 is a flowchart of an example process for generating relationships between nodes based on object properties.
FIG. 7 is a flowchart of an example process for predicting a most likely semantic model.
FIG. 8 is a flowchart of an example process for matching extended attribute properties in the metadata to a corresponding data property in the selected most likely semantic model.
FIG. 9 shows an example of a portion of metadata expressed as text formatted in JavaScript Object Notation.
FIG. 10 shows an example of a portion of a semantic model expressed as formatted text.
FIG. 11 shows an example of a portion of a semantic model expressed as a table.
FIG. 12 shows an example of a portion of object properties expressed as a table.
FIG. 13 shows an example of data triples suitable for generating a knowledge graph generated from the example metadata of FIG. 9.
FIG. 14 shows a partial knowledge graph generated from the example metadata of FIG. 9.
FIG. 15 shows a knowledge graph generated from the example metadata of FIG. 9.
FIG. 16 is an example of a graphical user interface that may be used in the performance of some or all of the support methods disclosed herein, in accordance with various embodiments.
FIG. 17 is a block diagram of an example computing device that may perform some or all of the scientific instrument support methods disclosed herein, in accordance with various embodiments.
FIG. 18 is a block diagram of an example scientific instrument support system in which some or all of the scientific instrument support methods disclosed herein may be performed, in accordance with various embodiments.
FIG. 19 is an example of a graphical chart generated from spectrum traces of readings from a Raman spectrometer.

### Detailed Description

Disclosed herein are scientific instrument support systems, as well as related methods, computing devices, and computer-readable media. For example, in some embodiments, a scientific instrument support apparatus includes memory hardware configured to store instructions and processing hardware configured to execute the instructions. The instructions include processing metadata to identify extended attributes present in the metadata, loading one or more semantic models based on media type annotations in the metadata, querying the loaded one or more semantic models for corresponding extended attribute properties that match extended attribute properties in the metadata, and, in response to finding corresponding extended attribute properties in a selected semantic model, matching each extended attribute property in the metadata to one of the corresponding data properties in the selected semantic model, aligning each corresponding data property to a node on an output graph, generating relationships between nodes on the output graph based on object properties, testing relationships between nodes, removing erroneous relationships from the output graph, and transforming a graphical user interface to display the output graph.

The scientific instrument support embodiments disclosed herein may achieve improved performance relative to conventional approaches. For example, techniques described in this specification automatically identify attributes and their associated values - even in unformatted or poorly formatted metadata. Techniques described in this specification also infer and generate semantic relationships between different attributes in the metadata - without requiring the relationships be defined in the metadata itself. Furthermore, techniques described in this specification automatically transform the complex relationships between attributes in the metadata into binary relationships (such as subject-predicate-object data triples) suitable for use by knowledge graphs. Finally, techniques described in this specification automatically infer relationships from poorly or incorrectly formatted metadata. By providing these improvements, techniques described in this specification solve technical problems associated with automatically transforming metadata generated by scientific instruments into knowledge graphs suitable for output to graphical user interfaces. The embodiments disclosed herein thus provide improvements to scientific instrument technology (e.g., improvements in the computer technology supporting such scientific instruments, among other improvements).

In the following detailed description, reference is made to the accompanying drawings that form a part hereof wherein like numerals designate like parts throughout, and in which is shown, by way of illustration, embodiments that may be practiced. It is to be understood that other embodiments may be utilized, and structural or logical changes may be made, without departing from the scope of the present disclosure. Therefore, the following detailed description is not to be taken in a limiting sense.

Various operations may be described as multiple discrete actions or operations in turn, in a manner that is most helpful in understanding the subject matter disclosed herein. However, the order of description should not be construed as to imply that these operations are necessarily order dependent. In particular, these operations may not be performed in the order of presentation. Operations described may be performed in a different order from the described embodiment. Various additional operations may be performed, and/or described operations may be omitted in additional embodiments.

For the purposes of the present disclosure, the phrases "A and/or B" and "A or B" mean (A), (B), or (A and B). For the purposes of the present disclosure, the phrases "A, B, and/or C" and "A, B, or C" mean (A), (B), (C), (A and B), (A and C), (B and C), or (A, B, and C). Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices.

The description uses the phrases "an embodiment," "various embodiments," and "some embodiments," each of which may refer to one or more of the same or different embodiments. Furthermore, the terms "comprising," "including," "having," and the like, as used with respect to embodiments of the present disclosure, are synonymous. When used to describe a range of dimensions, the phrase "between X and Y" represents a range that includes X and Y. As used herein, an "apparatus" may refer to any individual device, collection of devices, part of a device, or collections of parts of devices. The drawings are not necessarily to scale.

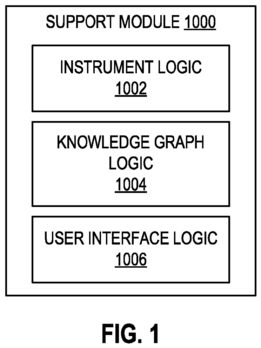

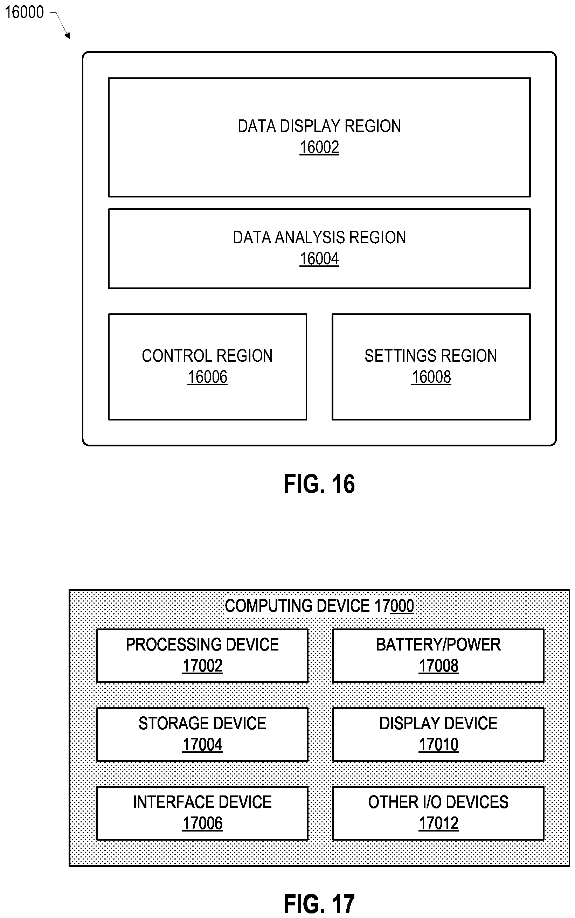

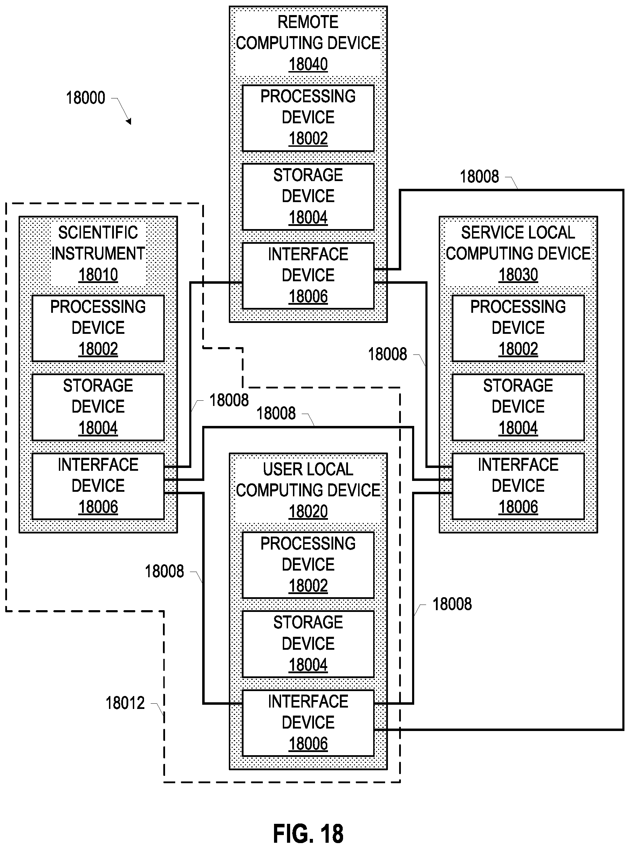

FIG. 1 is a block diagram of a scientific instrument support module 1000 for performing support operations, in accordance with various embodiments. The scientific instrument support module 1000 may be implemented by circuitry (e.g., including electrical and/or optical components), such as a programmed computing device. The logic of the scientific instrument support module 1000 may be included in a single computing device, or may be distributed across multiple computing devices that are in communication with each other as appropriate. Examples of computing devices that may, singly or in combination, implement the scientific instrument support module 1000 are discussed herein with reference to the computing device 17000 of FIG. 17, and examples of systems of interconnected computing devices, in which the scientific instrument support module 1000 may be implemented across one or more of the computing devices, is discussed herein with reference to the scientific instrument support system 18000 of FIG. 18.

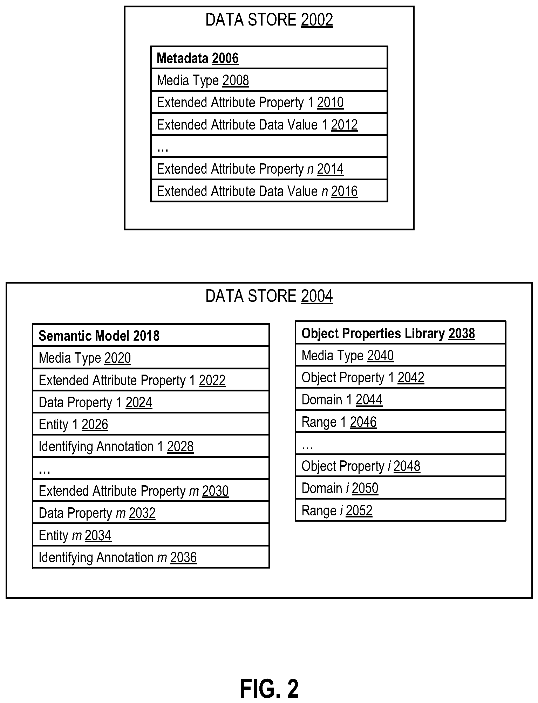

The scientific instrument support module 1000 may include first logic - which may be referred to herein as instrument logic 1002, second logic - which may be referred to herein as knowledge graph logic 1004, and third logic - which may be referred to herein as user interface logic 1006. As used herein, the term "logic" may include an apparatus that is to perform a set of operations associated with the logic. For example, any of the logic elements included in the support module 1000 may be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" may refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module may not include all of the logic elements depicted in the associated drawing; for example, a module may include a subset of the logic elements depicted in the associated drawing when that module is to perform a subset of the operations discussed herein with reference to that module. Additional functionality of the instrument logic 1002, knowledge graph logic 1004, and/or user interface logic 1006 will be described further on in this specification with reference to FIGS. 2-15.

FIG. 2 is a block diagram showing example data objects that can be generated and/or used by logic elements of support module 1000. In various implementations, data store 2002 and/or data store 2004 are stored on non-transitory computer-readable storage media - such as examples of storage device 17004 of computing device 17000. While data store 2002 and data store 2004 are shown as two elements in FIG. 2, they may be stored on a single non-transitory computer-readable storage medium and/or distributed across multiple non-transitory computer-readable storage media. Data store 2002 includes metadata 2006 from scientific instrument runs. In some examples, instrument logic 1002 generates metadata 2006 based on scientific instrument runs and store the generated metadata 2006 to data store 2002. In some embodiments, metadata 2006 is stored as a text file. In various implementations, metadata 2006 is stored as a JSON file. In some embodiments, metadata 2006 includes information - such as text strings - identifying a media type 2008 and one or more extended attributes. In some implementations, extended attributes may include file system features that enable users to associate computer files with metadata. For example, in the context of metadata generated by scientific instruments, extended attributes may refer to metadata that provides additional information about the data files generated by these instruments. These extended attributes may be crucial for ensuring that the data can be properly interpreted, analyzed, and shared. Examples of extended attributes in the context of files generated by scientific instruments include calibration information, instrument settings, environmental conditions, operator information, sample information, units and scales, timestamps, and/or data processing history.

Examples of calibration information include information about when the scientific instrument was last calibrated, and/or the calibration standards used. Examples of instrument settings include data about the settings used to produce the measurement data, such as gain, integration time, and/or any filters used. Examples of environmental conditions include data about temperature, pressure, and/or humidity. Examples of operator information include details about who conducted the experiment, handled the samples, and/or handled the scientific instrument. Examples of sample information include data about the sample being analyzed, such as its source, preparation method, and/or composition. Examples of units and scales include data about units of measurement and/or scales (such as linear scales, logarithmic scales, etc.) used by the scientific instrument. Examples of timestamps include when the sample was analyzed and/or when the data was processed and/or collected. Examples of data processing history include data about any processing and/or transformations that have been applied to the data files generated by the scientific instrument.

In some examples, the one or more extended attributes may include one or more key-value pairs, such as extended attribute property 2010 (which is a key) and extended attribute data value 2012 (which is a corresponding value). Keys may be strings that represent the name of the attribute, and values may be strings that specify the value of the attribute. While only two extended attributes are shown in FIG. 2 ([i] extended attribute property 2010 and extended attribute data value 2012 and [ii] extended attribute property 2014 and extended attribute data value 2016), metadata 2006 may include any number of extended attributes.

In various implementations, data store 2004 includes data or annotations - such as semantic model 2018 and/or object properties library 2038 - that knowledge graph logic 1004 uses to automatically parse metadata 2006, extract hidden semantic relationships between extended attributes in the metadata 2006, and generate knowledge graphs based on the metadata 2006. While FIG. 2 shows only a single semantic model 2018 and a single object properties library 2038 data object, data store 2004 may include any number of semantic models and object properties data objects. Furthermore, while semantic model 2018 and object properties library 2038 are shown as two separate data objects, semantic model 2018 and object properties library 2038 may be consolidated into a single data object or data structure (referred to collectively as a semantic model). In various implementations, semantic model 2018 may include data that knowledge graph logic 1004 uses to parse metadata 2006 and generate nodes for the knowledge graph. In some embodiments, object properties library 2038 may include data that knowledge graph logic 1004 uses to link the generated nodes with one another.

For example, semantic model 2018 includes a media type 2020 identifier and annotations for one or more extended attribute properties. In various examples, annotations for each extended attribute property includes an identifier of the extended attribute property itself (such as extended attribute property 2022), a data property value associated with the extended attribute property (such as data property 2024), an entity value (such as entity 2026), and an identifying annotation (such as identifying annotation 2028). In various implementations, the data property value corresponding to each extended attribute property may include a standard property used to generate a knowledge graph, the entity value corresponding to each extended attribute property may include a type of node used in the knowledge graph, and the identifying annotation corresponding to each extended attribute property may indicate a true or false value. While FIG. 2 illustrates annotations for two extended attribute properties ([i] data property 2024, entity 2026, and identifying annotation 2028 that correspond to extended attribute property 2022 and [ii] data property 2032, entity 2034, and identifying annotation 2036 that correspond to extended attribute property 2030), semantic model 2018 may include any number m of extended attributes and corresponding annotations for the m extended attributes.

Object properties library 2038 may include a media type 2040 identifier and annotations for one or more object properties. In various implementations, annotations for each object property may include an identifier of the object property itself (such as data property 2024), a domain associated with the object property (such as domain 2044), and a range associated with the object property (such as range 2046). In some embodiments, each object property includes data used to generate a link in the knowledge graph, while domain and range values associated with each object property value are used to determine endpoints for the object property value. While FIG. 2 shows only domains and ranges for only two object properties ([i] object property 2042 and associated domain 2044 and range 2046 and [ii] object property 2048 and associated domain 2050 and range 2052), object properties library 2038 may include any number / of object properties and corresponding domains and ranges.

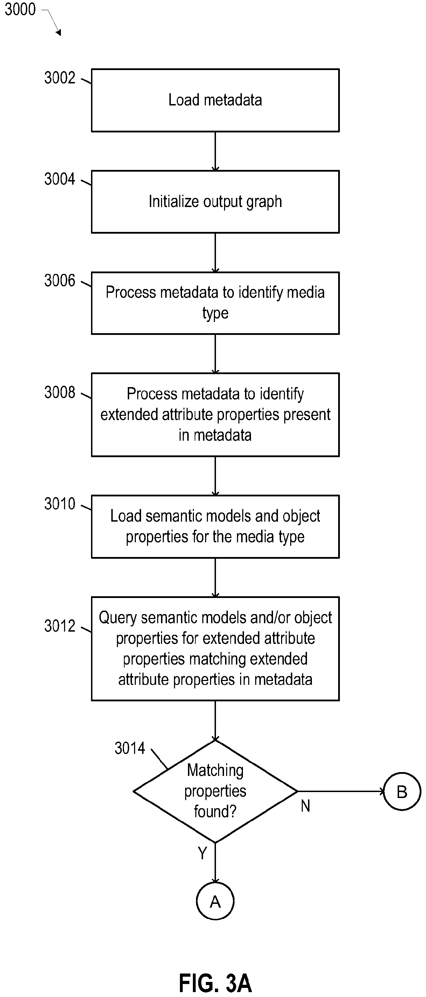

FIGS. 3A-3C are flowcharts of an example process 3000 for automatically processing metadata - such as metadata generated by scientific instruments - to generate knowledge graphs. At 3002, knowledge graph logic 1004 loads metadata. For example, knowledge graph logic 1004 loads metadata 2006 from data store 2002. At 3004, knowledge graph logic 1004 initializes an output graph. At 3006, knowledge graph logic 1004 processes loaded metadata 2006 to identify a media type. For example, knowledge graph logic 1004 parses metadata 2006 and identifies the media type based on media type 2008. At 3008, knowledge graph logic 1004 parses metadata 2006 to identify extended attribute properties present in metadata 2006. For example, graphing logic 3008 processes metadata 2006 and identifies each of the n extended attribute properties 2010-2014 present in metadata 2006. At 3010, knowledge graph logic 1004 loads semantic models and object properties corresponding to the media type 2008 indicated in metadata 2006. For example, knowledge graph logic 1004 loads semantic model 2018 in response to media type 2020 matching media type 2008. Conversely, knowledge graph logic 1004 does not load semantic model 2018 if media type 2020 does not match media type 2008. Similarly, in some examples, knowledge graph logic 1004 loads object properties library 2038 in response to media type 2040 matching media type 2008, and does not load object properties library 2038 in response to media type 2040 not matching media type 2008.

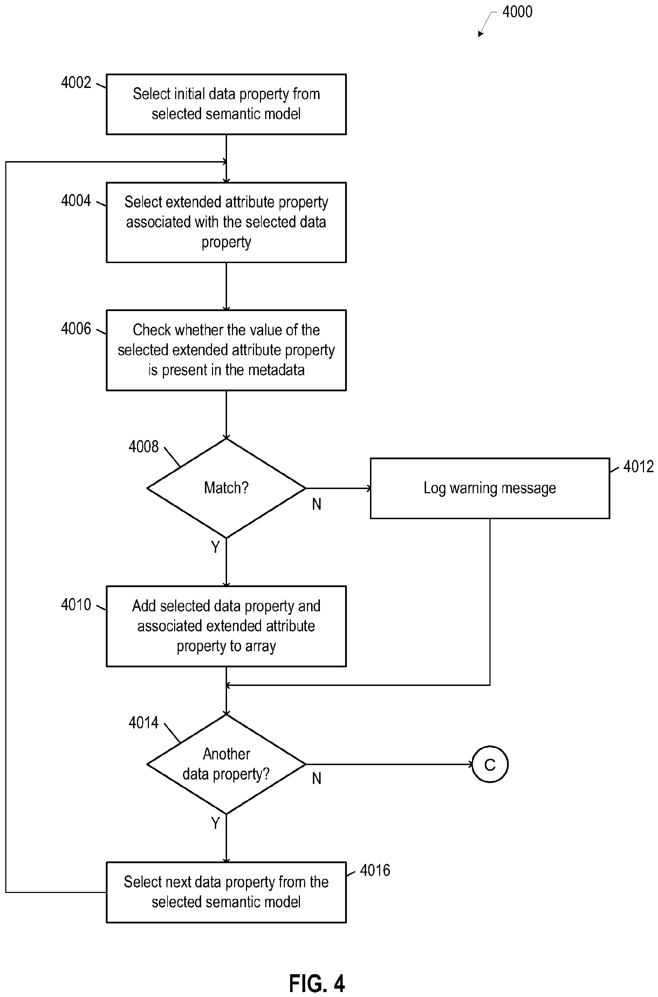

At 3012, knowledge graph logic 1004 queries the loaded semantic models and/or object properties for extended attribute properties that match extended properties present in metadata 2006. For example, if semantic model 2018 is loaded, knowledge graph logic 1004 determines whether any of the extended attribute properties 2022-2030 of semantic model 2018 match any of extended attribute properties 2010-2014 of metadata 2006. In response to finding matching extended attribute properties between semantic model 2018 and metadata 2006 ("YES" at decision block 3014), knowledge graph logic 1004 selects the semantic model with matching extended attribute properties at 3016. At 3018, knowledge graph logic 1004 matches each extended attribute property from metadata 3018 to a data property in the selected semantic model 2018. For example, in response to extended attribute property 2010 from metadata 2006 matching extended attribute property 2022 in semantic model 2018, knowledge graph logic 1004 matches extended attribute property 2010 to data property 2024 (the data property corresponding to the matched extended attribute property from the semantic model). Additional details associated with matching extended attribute properties from metadata to data properties in the selected semantic model will be described further on in this specification with reference to FIG. 4.

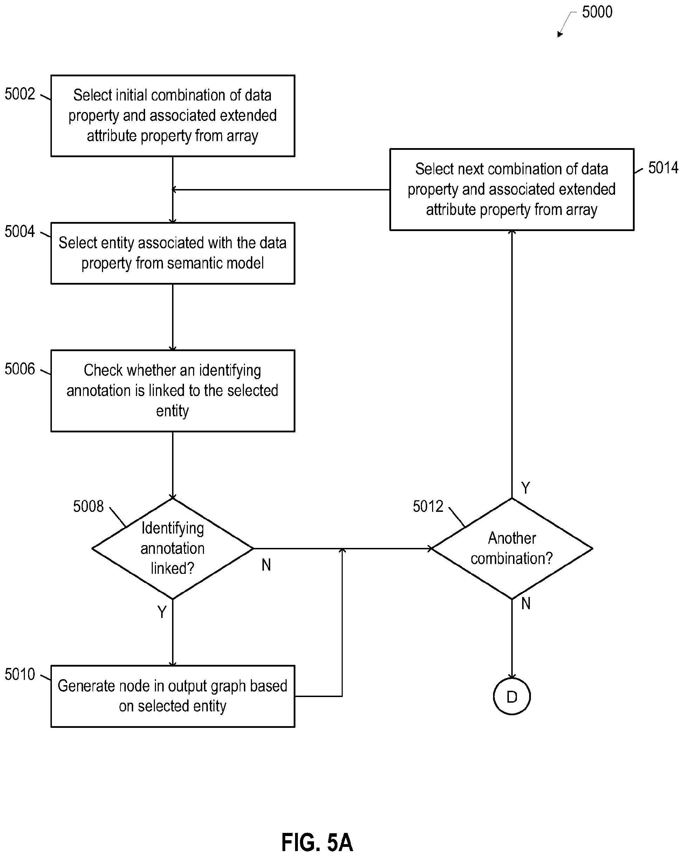

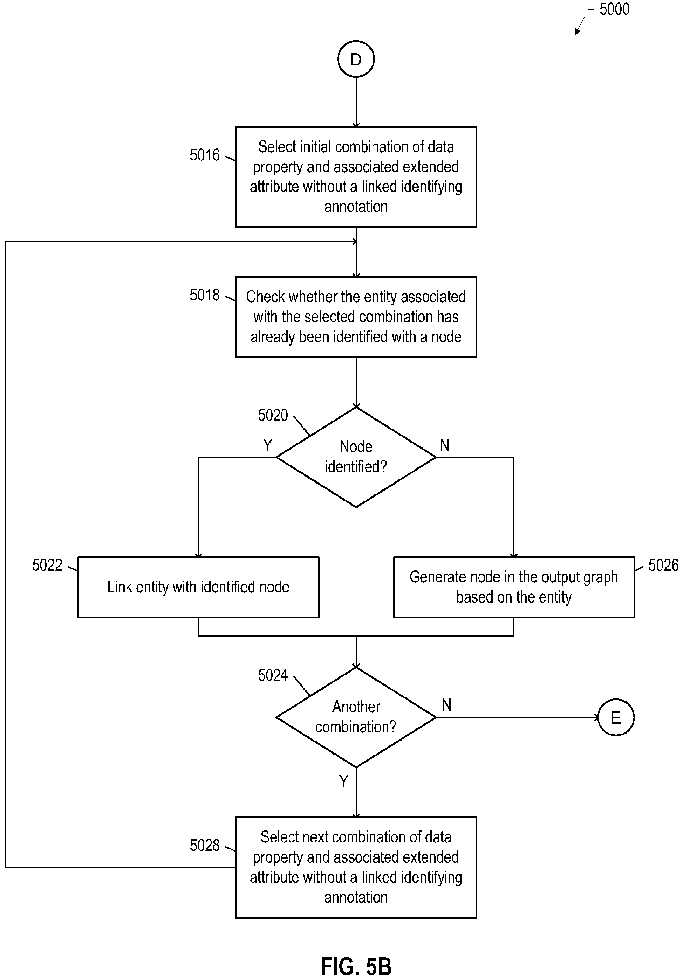

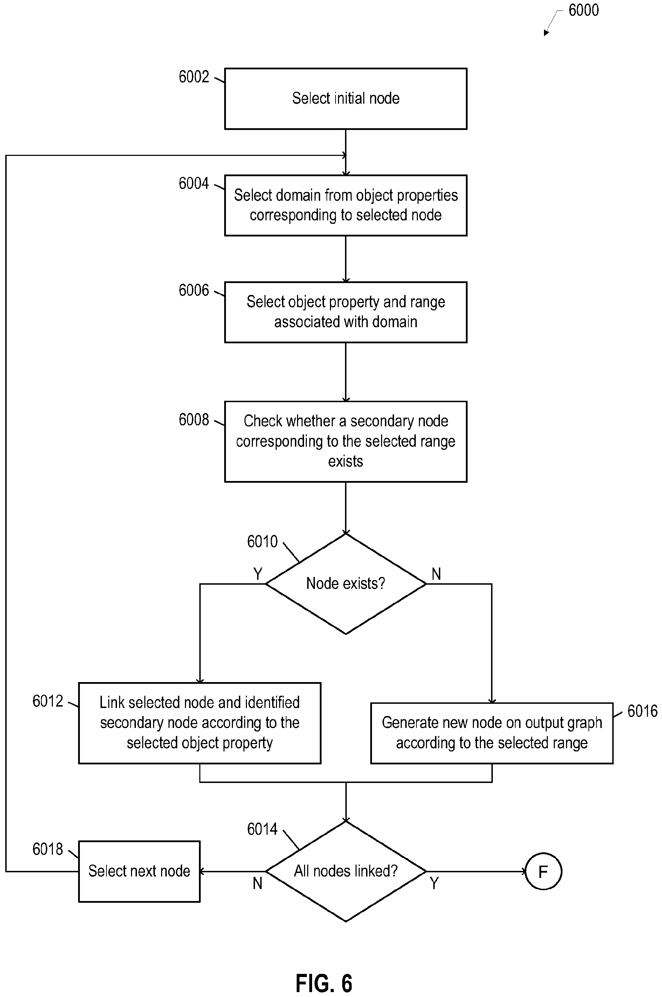

At 3020, knowledge graph logic 1004 aligns matched data properties to nodes on the output graph. For example, knowledge graph logic 1004 generates data triples based on each of the matched data properties and plots nodes on the knowledge graph based on the data triples. Additional details associated with aligning matched data properties to nodes on the output graph will be described further on in this specification with reference to FIG. 5. At 3022, knowledge graph logic 1004 generates relationships between nodes of the knowledge graph based on object properties - such as object properties library 2038. In various implementations, the relationships may include object properties from object properties library 2038 plotted as links between nodes on the knowledge graph. In various implementations, the domain of an object property indicates the node that the object property starts from and the range of the object property indicates the node where the object property terminates. Additional details associated with generating relationships between nodes based on object properties will be described further on in this specification with reference to FIG. 6.

At 3024, knowledge graph logic 1004 tests relationships between nodes and - if appropriate - removes erroneous relationships from the knowledge graph. For example, knowledge graph logic 1004 selects each node on the knowledge graph not matched to an extended attribute from metadata 2006. Knowledge graph logic 1004 tests whether the removal of each node would leave any other nodes disconnected in the knowledge graph. In response to determining that removal of a node would not leave any other nodes disconnected, knowledge graph logic 1004 removes the node. For example, knowledge graph logic 1004 removes all data triples related to the node. At 3026, knowledge graph logic 1004 creates standard properties mirroring data properties. For example, knowledge graph logic 1004 selects each data triple in the output graph generated using a data property. Knowledge graph logic 1004 checks whether a standard property annotation is linked to the data property. In response to determining that a standard property annotation is linked, knowledge graph logic 1004 generates a new data triple in the output graph with the same domain and range as the original data triple, but with the standard property in place of the data property. At 3028, knowledge graph logic 1004 and/or user interface logic 1006 outputs the knowledge graph to a graphical user interface.

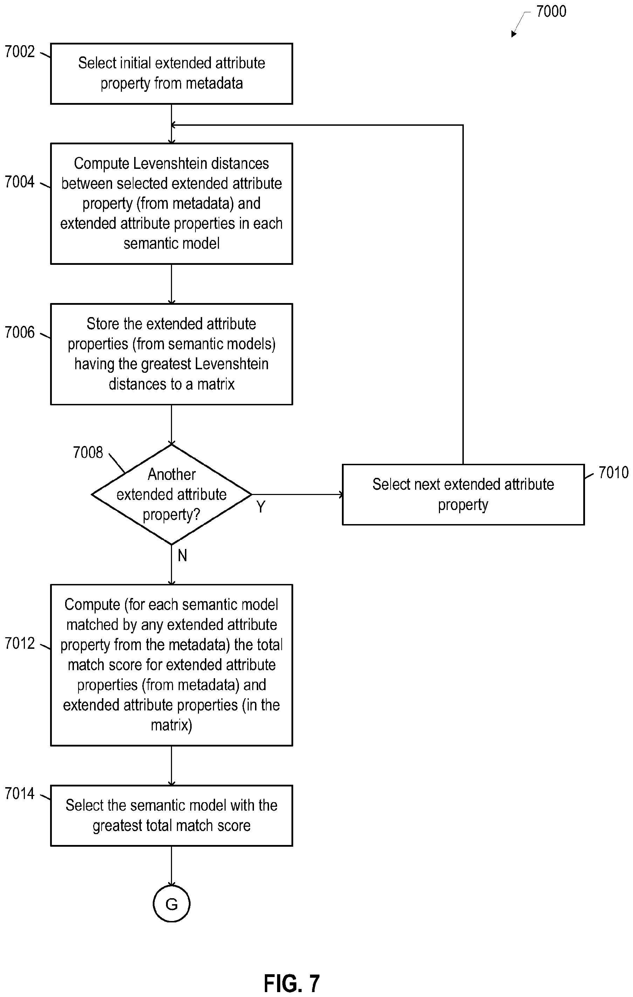

In response to not finding matching extended attribute properties between semantic model 2018 and metadata 2006 ("NO" at decision block 3014), knowledge graph logic 1004 determines whether fuzzy matching is enabled. In various implementations, fuzzy matching is a process that finds strings that are approximately equal. In some examples, fuzzy matching may be implemented by machine learning. In response to knowledge graph logic 1004 determining that fuzzy matching is not enabled ("NO" at decision block 3030), knowledge graph logic 1004 and/or user interface logic 1006 returns an error message to the graphical user interface (for example, indicating that matching semantic models cannot be found for the loaded metadata). In response to knowledge graph logic 1004 determining that fuzzy matching is enabled ("YES" at decision block 3030), knowledge graph logic 1004 predicts the most likely semantic model and selects that semantic model at 3034. Additional details associated with predicting the most likely semantic model will be described further on in this specification with reference to FIG. 7. At 3036, knowledge graph logic 1004 matches each extended attribute property in metadata 2006 to a corresponding data property in the selected semantic model. After matching each extended attribute property to a corresponding data property in the selected semantic model, knowledge graph logic 1004 aligns matched data properties to nodes on the output graph at 3020.

FIG. 4 is a flowchart of an example process 4000 for matching extended attribute properties from metadata to data properties in a semantic model. At 4002, knowledge graph logic 1004 selects an initial data property from the selected semantic model. At 4004, knowledge graph logic 1004 selects an extended attribute property from the semantic model associated with the selected data property. For example, if data property 2024 is selected at 4002, corresponding extended attribute property 2022 will be selected at 4004. At 4006, knowledge graph logic 1004 checks whether the value of the selected extended attribute property is present in metadata. For example, if extended attribute property 2022 was selected at 4004, knowledge graph logic 1004 checks whether any of extended attribute properties 2010-2014 in metadata 2006 matches extended attribute property 2022. In response to determining the extended attribute property from the semantic model is present in the metadata ("YES" at decision block 4008), knowledge graph logic 1004 adds the selected data property and extended attribute property to an array. For example, knowledge graph logic 1004 adds data property 2024 and extended attribute property 2022 to the array.

At decision block 4014, knowledge graph logic 1004 whether another unprocessed data property is present in the selected semantic model. In response to determining that the extended attribute property from the semantic model is not present in the metadata ("NO" at decision block 4008), knowledge graph logic 1004 logs a warning message at 4012 and proceeds to determine whether another unprocessed data property is present in the selected semantic model. In various implementations, the error message is displayed on the graphical user interface. In response to determining that another unprocessed data property is present in the selected semantic model ("YES" at decision block 4014), knowledge graph logic 1004 selects the next unprocessed data property from the selected semantic model at 4016 and selects the extended attribute property associated with the selected data property at 4004. In response to determining that another unprocessed data property is not present in the selected semantic model ("NO" at decision block 4014), knowledge graph logic 1004 aligns matched data properties to nodes on the output graph at 3020.

FIGS. 5A-5B are flowcharts of an example process 5000 for aligning matched data properties to nodes on the output knowledge graph. At 5002, knowledge graph logic 1004 selects an initial combination of data property and its associated extended attribute property from an array (such as the array generated at 4010). At 5004, knowledge graph logic 1004 selects an entity associated with the data property from the semantic model. For example, if the selected combination of data property and extended attribute property includes data property 2024 and extended attribute property 2022, knowledge graph logic 1004 selects entity 2026 from semantic model 2018. At 5006, knowledge graph logic 1004 checks whether an identifying annotation is linked to the selected entity. For example, if entity 2026 was selected at 5004, knowledge graph logic 1004 checks whether identifying annotation 2028 has a value of "TRUE." Identifying annotation 2028 may be considered linked to entity 2026 in response to its value being "TRUE." Conversely, identifying annotation 2028 may be considered not linked to entity 2026 in response to its value being "FALSE." In response to an identifying annotation being linked to the selected entity ("YES" at decision block 5010), knowledge graph logic 1004 generates a node in the output knowledge graph based on the selected entity at 5010 and determines whether another unprocessed combination of data property and extended attribute property is present in the array (at decision block 5012). In response to an identifying annotation not being linked to the selected entity ("NO" at decision block 5008), knowledge graph logic 1004 determines whether another unprocessed combination of data property and extended attribute property is present in the array (at decision block 5012).

In response to determining another unprocessed combination of data property and extended attribute property is present in the array ("YES" at decision block 5012), knowledge graph logic 1004 selects the next combination of data property and associated extended attribute property from the array at 5014 and selects the entity associated with the data property from the semantic model at 5004. In response to determining that another unprocessed combination of data property and extended attribute property is not present in the array ("NO" at decision block 5012), knowledge graph logic 1004 selects the initial combination of data property and associated extended attribute from the array that does not have a linked identifying annotation at 5016. At 5018, knowledge graph logic 1004 checks whether the entity associated with the selected combination has already been associated with a node of the knowledge graph. In response to determining that the entity has already been identified with a node ("YES" at decision block 5020), knowledge graph logic 1004 links the entity with the identified node at 5022. At decision block 5024, knowledge graph logic 1004 checks whether another combination of data property and associated extended attribute property without a linked identifying annotation is present at the array. In response to determining that the entity has not already been identified with a node ("NO" at decision block 5020), knowledge graph logic 1004 generates a node in the output graph based on the entity at 5026 and determines whether another combination of data property and associated extended attribute property without a linked identifying annotation is present in the array at decision block 5024.

In response to determining that another combination of data property and associated extended attribute property without a linked identifying annotation is present in the array ("YES" at decision block 5024), knowledge graph logic 1004 selects the next combination of data property and associated extended attribute without a linked identifying annotation at 5028 and checks whether the entity associated with the selected combination has already been identified with a node at 5018. In response to determining that another combination of data property and associated extended attribute property without a linked identifying annotation is not present in the array ("NO" at decision block 5024), knowledge graph logic 1004 generates relationships between nodes based on object properties at 3022.

FIG. 6 is a flowchart of an example process 6000 for generating relationships between nodes based on object properties. At 6002, knowledge graph logic 1004 selects an initial node of the knowledge graph. At 6004, knowledge graph logic 1004 selects a domain from the object properties corresponding to the selected node. At 6006, knowledge graph logic 1004 selects the object property and range associated with the selected domain. For example, if domain 2044 was selected at 6004, then object property 2042 and range 2046 would be selected at 6006. At 6008, knowledge graph logic 1004 checks whether a secondary node corresponding to the range selected at 6006 exists in the knowledge graph. In response to determining that the secondary node exists ("YES" at decision block 6010), knowledge graph logic 1004 links the selected node and the identified secondary node according to the selected object property at 6012. For example, the selected node may be the origin or domain, the identified secondary node may be the terminus or range, and the object property may link the domain to the range. At 6014, knowledge graph logic 1004 determines whether all nodes in the knowledge graph are linked. In response to determining that the secondary node does not exist ("NO" at 6010), knowledge graph logic 1004 generates a new node on the output graph according to the selected range at 6016 and determines whether all nodes in the knowledge graph are linked at 6014. In response to determining that all nodes have not been linked ("NO" at decision block 6014), knowledge graph logic 1004 selects the next node at 6018 and selects the domain from the object properties that corresponds to the selected node at 6004. In response to determining that all nodes have been linked ("YES" at decision block 6014), knowledge graph logic 1004 tests relationships between nodes and removes erroneous relationships from the knowledge graph at 3024.

FIG. 7 is a flowchart of an example process 7000 for predicting a most likely semantic model. At 7002, knowledge graph logic 1004 selects an initial extended attribute property from the metadata. At 7004, graphing logic 7004 computes a Levenshtein distance between the selected extended attribute property from the metadata and each extended attribute property in each semantic model. The Levenshtein distance is a string metric for measuring a difference between two strings or sequences of text. The Levenshtein distance may refer to a number of single-character edits (such as insertions, deletions, or substitutions) required to change a first string into a second string (or the second string into the first string). In some examples, if the first string has a length i and the second string has a length j, then the Levenshtein distance may be calculated by first initializing an *i* × j matrix. The *i* × j matrix is iteratively populated. For each cell, a deletion cost, insertion cost, and a substitution cost may be calculated. The deletion cost may be calculated as the value of the cell to the left of the current cell plus one. The insertion cost may be calculated as the value of the cell above the current cell plus one. The substitution cost may be calculated as (i) the value of the cell diagonally above and to the left plus one if that cell is not equal to the current cell or (ii) the value of the cell diagonally above and to the left if that cell is equal to the current cell. The minimum of the deletion cost, insertion cost, and substitution cost is set as the value of the current cell. The final value of the i × j matrix (in the bottom-right corner) is the Levenshtein distance.

At 7006, knowledge graph logic 1004 stores the extended attribute properties from the semantic models that have the greatest Levenshtein distances to a matrix. At 7008, knowledge graph logic 1004 determines whether another extended attribute property is present in the metadata. In response to determining that another extended attribute property is present in the metadata ("YES" at decision block 7008), knowledge graph logic 1004 selects the next extended attribute property at 7014 and computes a Levenshtein distance between the selected extended attribute property from the metadata and each extended attribute property in each semantic model at 7004. In response to determining that another extended attribute is not present in the metadata ("NO" at decision block 7008), knowledge graph logic 1004 computes (for each semantic model matched by any extended attribute property from the metadata) the total match score for extended attribute properties (from metadata) and extended attribute properties (in the matrix) at 7012. At 7014, knowledge graph logic 1004 selects the semantic model with the greatest total match score as the most likely semantic model.

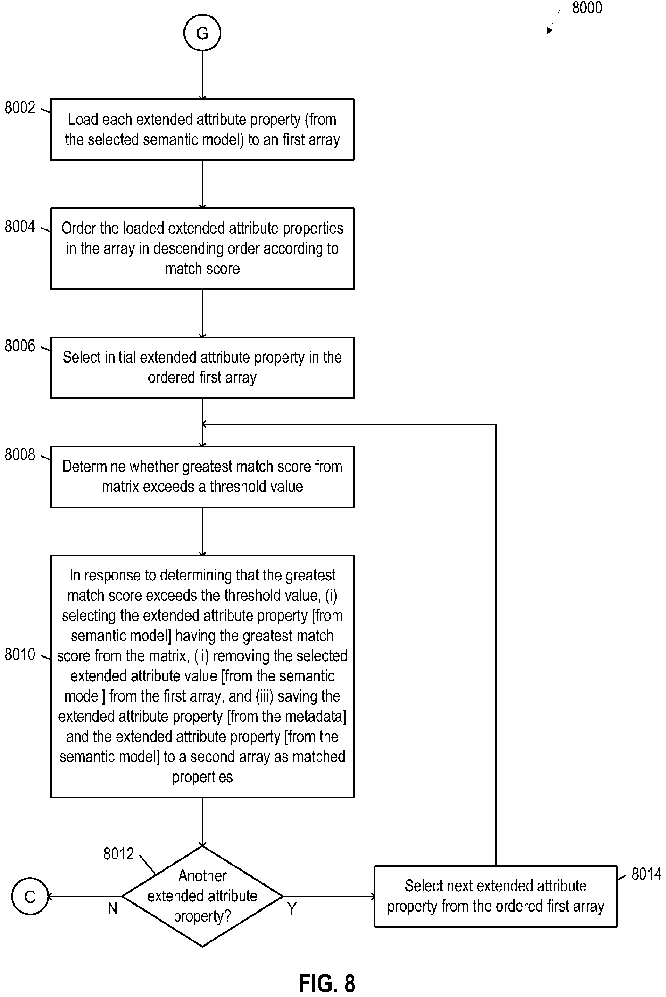

FIG. 8 is a flowchart of an example process 8000 for matching extended attribute properties in the metadata to a corresponding data property in the selected most likely semantic model. After knowledge graph logic 1004 selects the semantic model with the greatest total match score as the most likely semantic model at 7014, knowledge graph logic 1004 loads each extended attribute property present in the selected semantic model to a first array at 8002. At 8004, knowledge graph logic 1004 orders the first array so that the loaded extended attribute properties are in descending order according to their match score (for example, by referencing the matrix). At 8006, knowledge graph logic 1004 selects an initial extended attribute property in the ordered first array. At 8008, knowledge graph logic 1004 determines whether the greatest match score from the matrix computed at 7006 exceeds a threshold value. In response to determining at the greatest match score exceeds a first threshold value at 7006, knowledge graph logic 1004 (i) selects the extended attribute property [from the semantic model] from the matrix, (ii) removes the selected extended attribute value [from the semantic model] from the first array, and (iii) saves the extended attribute property [from the metadata] and the extended attribute property [from the semantic model] to a second array as matched properties. At 8012, knowledge graph logic 1004 determines whether another extended attribute property is present in the ordered first array. In response to determining that another extended attribute property is present in the first array ("YES" at decision block 8012), knowledge graph logic 1004 selects the next extended attribute property from the ordered first array at 8014 and determines whether the greatest match score from the matrix exceeds a threshold value at 8008.

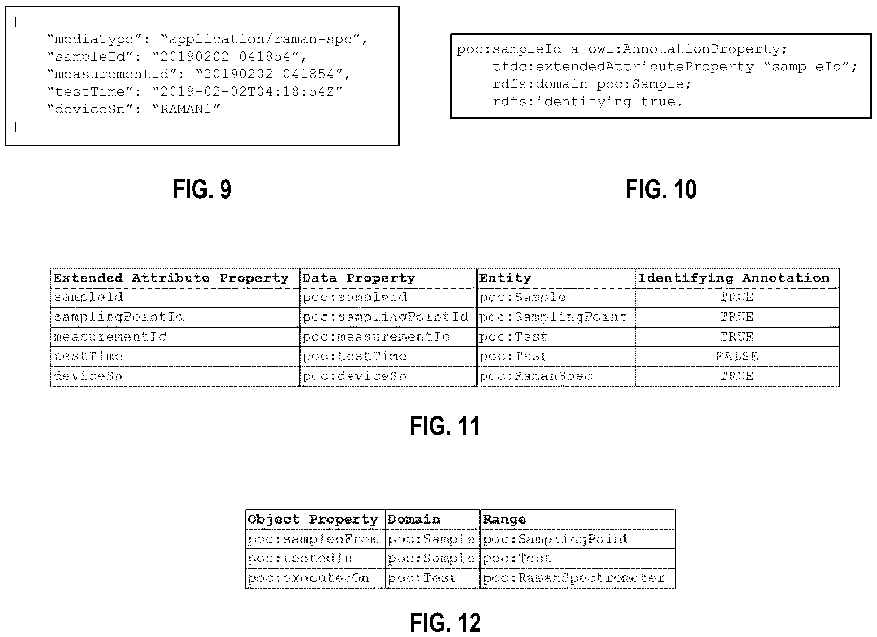

FIG. 9 shows an example of a portion of metadata expressed as text formatted in JavaScript Object Notation (JSON). In the example of FIG. 9, "mediaType": "application/raman-spc" indicates that the media type is "application/raman-spc." "sampleld", "measurementld", "testTime", and "deviceSn" are extended attribute properties, and "20190202_041854", "20190202_041854", "2019-02-02T04:18:54Z", and "RAMAN1" are extended attribute properties corresponding to respective extended attribute properties.

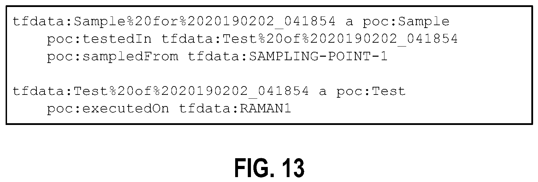

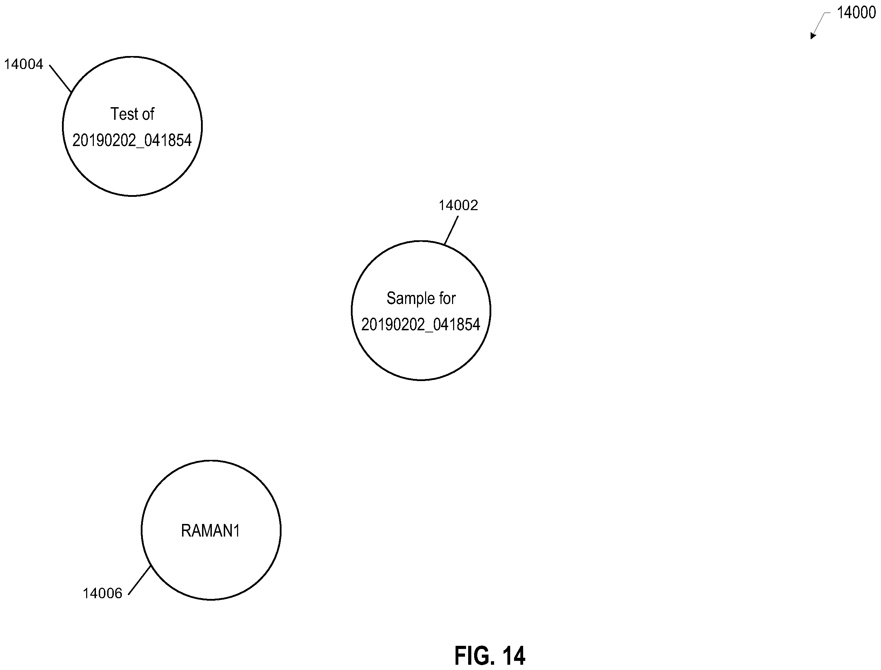

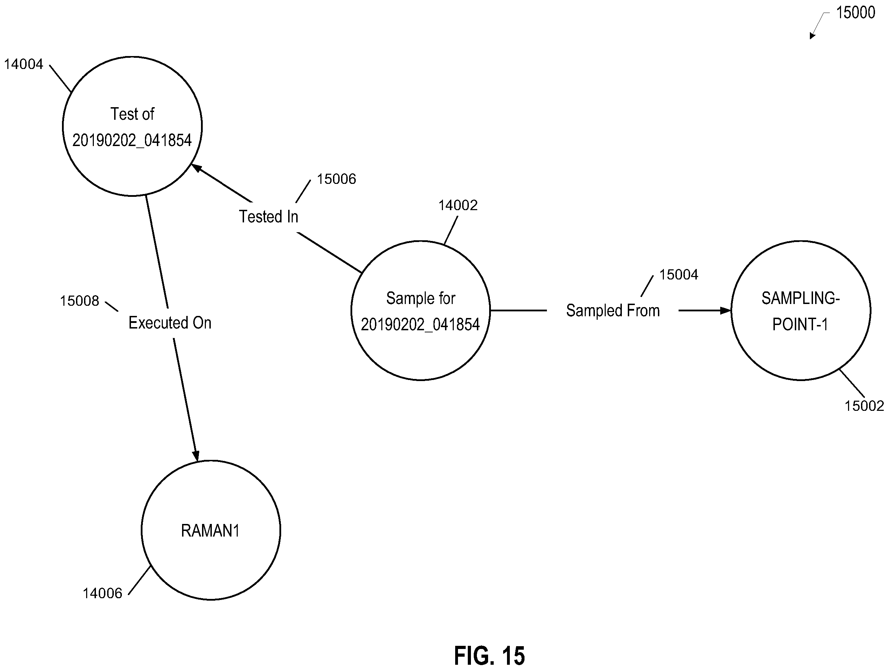

FIG. 10 shows an example of a portion of a semantic model expressed as formatted text. FIG. 11 shows an example of a portion of a semantic model expressed as a table. FIG. 12 shows an example of a portion of object properties expressed as a table. FIG. 13 shows an example of data triples suitable for generating a knowledge graph generated from the example metadata of FIG. 9. FIG. 14 shows a partial knowledge graph 14000 generated from the example metadata of FIG. 9. FIG. 15 shows a knowledge graph 15000 generated from the example metadata of FIG. 9. As previously described with reference to process 3000 and FIGS. 3A-3C, knowledge graph logic 1004 parses the example metadata of FIG. 9 to determine a suitable semantic model (for example, as represented in FIG. 11) and suitable object properties (for example, as represented in FIG. 12). Knowledge graph logic 1004 matches each extended attribute property from the metadata to a data property in the selected semantic model and aligns matched data properties to nodes on the knowledge graph. For example, where "sampleId", "measurementId", and "deviceSn" from the metadata (FIG. 9) are matched to data properties in the semantic model (FIG. 11), data triples for each matched data property are generated and nodes 14002-14006 are generated based on the data triples. Nodes 14002-14006 are labeled with the respective extended attribute data value for each matched extended attribute property. For example, since extended attribute property "sampleId" from the metadata is matched with extended attribute property sampleId from the semantic model, corresponding entity poc:sampleId is generated as node 14002 and labeled with corresponding extended attribute data value "20190202_041854" from the metadata. Similarly, since extended attribute property "measurementId" is matched with extended attribute property measurementId from the semantic model, corresponding entity pac: Test is generated as node 14004 and labeled with corresponding extended attribute data value "20190202_041854" from the metadata. Finally, since extended attribute property "deviceSn" is matched with extended attribute property deviceSn from the metadata, corresponding entity pac: RamanSpec is generated as node 14006 and labeled with corresponding extended attribute data value "RAMAN1" from the metadata.

Knowledge graph logic 1004 then selects initial node 14002 from knowledge graph 14000. Knowledge graph logic 1004 selects corresponding domains from object properties (FIG. 12). If the range associated with the domain already exists on the knowledge graph as a node, knowledge graph logic 1004 links the domain and existing range with the object property. If the range does not already exist on the knowledge graph as a node, knowledge graph logic 1004 adds the range as a node and links the domain and range with the object property. For example, since range pac: SamplingPoint did not already exist on knowledge graph 14000 as a node, knowledge graph logic 1004 adds pac:SamplingPoint as node 15002 on knowledge graph 15000 and links domain pac: sample (node 14002) and range pac:SamplingPoint (node 15002) with object property pac: sampledfrom as link 15004 going to domain node 14002 to range node 15002. Since range pac:Test already existed on knowledge graph 14000 as node 14004, knowledge graph logic 1004 links domain pac: sample (node 14002) and range poc:Test (node 14004) with object property pac: testedin as link 15006 going from domain node 14002 to range node 14004. Similarly, since range poc:RamanSpectrometer already existed on knowledge graph 14000 as node 14006, knowledge graph logic 1004 links domain poc:Test (node 14004) and range poc:RamanSpectrometer (node 14006) with object property poc:executedOn as link 15008 going from domain node 14004 to range node 14006.

In some examples, knowledge graph logic 1004 first generates a data triple (such as the data triple shown in FIG. 13) and then generates a knowledge graph (such as knowledge graph 15000 shown in FIG. 15). As previously discussed, data triples may be expressed in subject-predicate-object form. Thus, each data triple may include a subject (which is the entity the statement is about), a predicate (which represents the relationship or property connecting the subject and object), and the object (which is another entity that the subject is related to or associated with through the predicate). In some examples, the subject may be an entity or node, the predicate may be an object property or link, and the object may be an entity or node. In various implementations, the subject may form the domain of the statement, the object may form the range, and the predicate may form the link extending from the domain to the range.

For example, as shown in FIG. 13, the expression "tfdata:Sample%20for%2020190202_041854 a pac:Sample" represents a subject and is shown on knowledge graph 15000 as node 14002. Nested expression "pac: testedIn tfdata:Test%20of%2020190202_041854" forms an associated predicate (poc: testedin -link 15006) and object (tfdata:Test%20of%2020190202_041854 - node 14004) pair. Based on this expression, knowledge graph logic 1004 generates node 14002 based on the subject, node 14004 based on the object, and a link 15006 from node 14002 to node 14004 based on the predicate. Analogously, knowledge graph logic 1004 generates node 15002 based on object "tfdata:SAMPLING-POINT-1" and link 15004 extending from node 14002 to node 15002 based on predicate "poc:sampledFrom." Similarly, knowledge graph logic 1004 generates node 14006 based on object "tfdata:RAMAN1" and link 15008 based on predicate "poc:executedon." Knowledge graph logic 1004 links subject node 14004 (tfdata:Test%20of%2020190202_041854 a poc:Test) and object node 14006 with predicate link 15008.

The scientific instrument support methods disclosed herein may include interactions with a human user (e.g., via the user local computing device 18020 discussed herein with reference to FIG. 18). These interactions may include providing information to the user (e.g., information regarding the operation of a scientific instrument such as the scientific instrument 18010 of FIG. 18, information regarding a sample being analyzed or other test or measurement performed by a scientific instrument, information retrieved from a local or remote database, or other information) or providing an option for a user to input commands (e.g., to control the operation of a scientific instrument such as the scientific instrument 18010 of FIG. 18, or to control the analysis of data generated by a scientific instrument), queries (e.g., to a local or remote database), or other information. In some embodiments, these interactions may be performed through a graphical user interface (GUI) that includes a visual display on a display device (e.g., the display device 17010 discussed herein with reference to FIG. 17) that provides outputs to the user and/or prompts the user to provide inputs (e.g., via one or more input devices, such as a keyboard, mouse, trackpad, or touchscreen, included in the other I/O devices 17012 discussed herein with reference to FIG. 17). The scientific instrument support systems disclosed herein may include any suitable GUIs for interaction with a user.

FIG. 16 depicts an example GUI 16000 that may be used in the performance of some or all of the support methods disclosed herein, in accordance with various embodiments. As noted above, the GUI 16000 may be provided on a display device (e.g., the display device 17010 discussed herein with reference to FIG. 17) of a computing device (e.g., the computing device 17000 discussed herein with reference to FIG. 17) of a scientific instrument support system (e.g., the scientific instrument support system 18000 discussed herein with reference to FIG. 18), and a user may interact with the GUI 16000 using any suitable input device (e.g., any of the input devices included in the other I/O devices 17012 discussed herein with reference to FIG. 17) and input technique (e.g., movement of a cursor, motion capture, facial recognition, gesture detection, voice recognition, actuation of buttons, etc.).

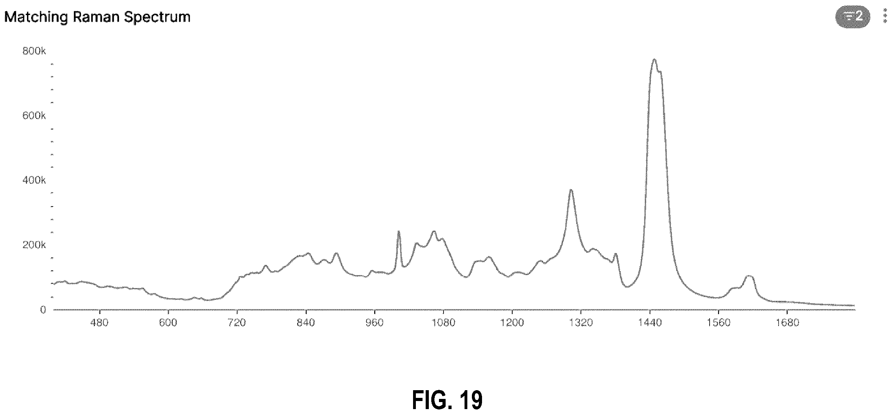

The GUI 16000 may include a data display region 16002, a data analysis region 16004, a scientific instrument control region 16006, and a settings region 16008. The particular number and arrangement of regions depicted in FIG. 16 is simply illustrative, and any number and arrangement of regions, including any desired features, may be included in a GUI 16000. The data display region 16002 may display data generated by a scientific instrument (e.g., the scientific instrument 18010 discussed herein with reference to FIG. 18). For example, scientific instrument 18010 may include one or more spectrometers, such as one or more Raman spectrometers. The one or more Raman spectrometers may generate spectrum traces of ex, y) readings that can be visualized in a graphical chart. FIG. 19 is an example of a graphical chart generated from spectrum traces of readings from a Raman spectrometer. Metadata for spectrum trace readings generated by Raman spectrometers may include the date and/or time at which a sample was taken, the source from which the sample was taken (e.g., the sampling point), the serial number of the instrument making the measurement, an identifier associated with the operator of the instrument, an identifier associated with the project, and other appropriate metadata. In various implementations, graphical charts generated from data generated by scientific instruments 18010 - such as the chart shown in FIG. 19 - are displayed in the data display region 16002. In various implementations, the data display region 16002 may display knowledge graphs generated by knowledge graph logic 1004 and/or user interface logic 1006 (such as knowledge graph 14000 and/or knowledge graph 15000). In various implementations, the data display region 16002 displays any error messages or logs generated by knowledge graph logic 1004.

The data analysis region 16004 may display the results of data analysis (e.g., the results of analyzing the data illustrated in the data display region 16002 and/or other data). In some embodiments, the data display region 16002 and the data analysis region 16004 may be combined in the GUI 16000 (e.g., to include data output from a scientific instrument, and some analysis of the data, in a common graph or region). The scientific instrument control region 16006 may include options that allow the user to control a scientific instrument (e.g., the scientific instrument 18010 discussed herein with reference to FIG. 18). The settings region 16008 may include options that allow the user to control the features and functions of the GUI 16000 (and/or other GUIs) and/or perform common computing operations with respect to the data display region 16002 and data analysis region 16004 (e.g., saving data on a storage device, such as the storage device 17004 discussed herein with reference to FIG. 17, sending data to another user, labeling data, etc.).

As noted above, the scientific instrument support module 1000 may be implemented by one or more computing devices. FIG. 17 is a block diagram of a computing device 17000 that may perform some or all of the scientific instrument support methods disclosed herein, in accordance with various embodiments. In some embodiments, the scientific instrument support module 1000 may be implemented by a single computing device 17000 or by multiple computing devices 17000. Further, as discussed below, a computing device 17000 (or multiple computing devices 17000) that implements the scientific instrument support module 1000 may be part of one or more of the scientific instrument 18010, the user local computing device 18020, the service local computing device 18030, or the remote computing device 18040 of FIG. 18.

The computing device 17000 of FIG. 17 is illustrated as having a number of components, but any one or more of these components may be omitted or duplicated, as suitable for the application and setting. In some embodiments, some or all of the components included in the computing device 17000 may be attached to one or more motherboards and enclosed in a housing (e.g., including plastic, metal, and/or other materials). In some embodiments, some these components may be fabricated onto a single system-on-a-chip (SoC) (e.g., an SoC may include one or more processing devices 17002 and one or more storage devices 17004). Additionally, in various embodiments, the computing device 17000 may not include one or more of the components illustrated in FIG. 17, but may include interface circuitry (not shown) for coupling to the one or more components using any suitable interface (e.g., a Universal Serial Bus (USB) interface, a High-Definition Multimedia interface (HDMI) interface, a Controller Area Network (CAN) interface, a Serial Peripheral interface (SPI) interface, an Ethernet interface, a wireless interface, or any other appropriate interface). For example, the computing device 17000 may not include a display device 17010, but may include display device interface circuitry (e.g., a connector and driver circuitry) to which a display device 17010 may be coupled.

The computing device 17000 may include a processing device 17002 (e.g., one or more processing devices). As used herein, the term "processing device" may refer to any device or portion of a device that processes electronic data from registers and/or memory to transform that electronic data into other electronic data that may be stored in registers and/or memory. The processing device 17002 may include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices.

The computing device 17000 may include a storage device 17004 (e.g., one or more storage devices). The storage device 17004 may include one or more memory devices such as random access memory (RAM) (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In some embodiments, the storage device 17004 may include memory that shares a die with a processing device 17002. In such an embodiment, the memory may be used as cache memory and may include embedded dynamic random access memory (eDRAM) or spin transfer torque magnetic random access memory (STT-MRAM), for example. In some embodiments, the storage device 17004 may include non-transitory computer readable media having instructions thereon that, when executed by one or more processing devices (e.g., the processing device 17002), cause the computing device 17000 to perform any appropriate ones of or portions of the methods disclosed herein.

The computing device 17000 may include an interface device 17006 (e.g., one or more interface devices 17006). The interface device 17006 may include one or more communication chips, connectors, and/or other hardware and software to govern communications between the computing device 17000 and other computing devices. For example, the interface device 17006 may include circuitry for managing wireless communications for the transfer of data to and from the computing device 17000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. Circuitry included in the interface device 17006 for managing wireless communications may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). In some embodiments, circuitry included in the interface device 17006 for managing wireless communications may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In some embodiments, circuitry included in the interface device 17006 for managing wireless communications may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In some embodiments, circuitry included in the interface device 17006 for managing wireless communications may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In some embodiments, the interface device 17006 may include one or more antennas (e.g., one or more antenna arrays) to receipt and/or transmission of wireless communications.

In some embodiments, the interface device 17006 may include circuitry for managing wired communications, such as electrical, optical, or any other suitable communication protocols. For example, the interface device 17006 may include circuitry to support communications in accordance with Ethernet technologies. In some embodiments, the interface device 17006 may support both wireless and wired communication, and/or may support multiple wired communication protocols and/or multiple wireless communication protocols. For example, a first set of circuitry of the interface device 17006 may be dedicated to shorter-range wireless communications such as Wi-Fi or Bluetooth, and a second set of circuitry of the interface device 17006 may be dedicated to longer-range wireless communications such as global positioning system (GPS), EDGE, GPRS, CDMA, WiMAX, LTE, EV-DO, or others. In some embodiments, a first set of circuitry of the interface device 17006 may be dedicated to wireless communications, and a second set of circuitry of the interface device 17006 may be dedicated to wired communications.

The computing device 17000 may include battery/power circuitry 17008. The battery/power circuitry 17008 may include one or more energy storage devices (e.g., batteries or capacitors) and/or circuitry for coupling components of the computing device 17000 to an energy source separate from the computing device 17000 (e.g., AC line power).

The computing device 17000 may include a display device 17010 (e.g., multiple display devices). The display device 17010 may include any visual indicators, such as a heads-up display, a computer monitor, a projector, a touchscreen display, a liquid crystal display (LCD), a light-emitting diode display, or a flat panel display.

The computing device 17000 may include other input/output (I/O) devices 17012. The other I/O devices 17012 may include one or more audio output devices (e.g., speakers, headsets, earbuds, alarms, etc.), one or more audio input devices (e.g., microphones or microphone arrays), location devices (e.g., GPS devices in communication with a satellite-based system to receive a location of the computing device 17000, as known in the art), audio codecs, video codecs, printers, sensors (e.g., thermocouples or other temperature sensors, humidity sensors, pressure sensors, vibration sensors, accelerometers, gyroscopes, etc.), image capture devices such as cameras, keyboards, cursor control devices such as a mouse, a stylus, a trackball, or a touchpad, bar code readers, Quick Response (QR) code readers, or radio frequency identification (RFID) readers, for example.

The computing device 17000 may have any suitable form factor for its application and setting, such as a handheld or mobile computing device (e.g., a cell phone, a smart phone, a mobile internet device, a tablet computer, a laptop computer, a netbook computer, an ultrabook computer, a personal digital assistant (PDA), an ultra mobile personal computer, etc.), a desktop computing device, or a server computing device or other networked computing component.

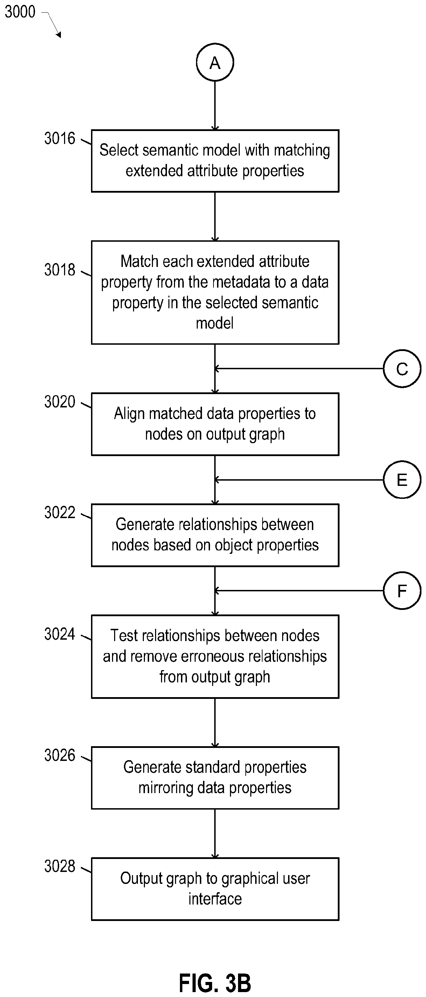

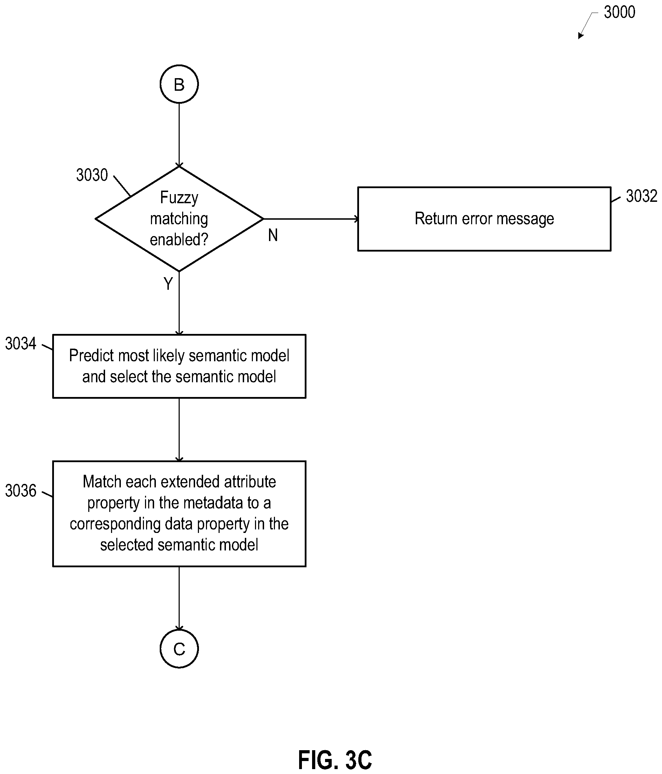

One or more computing devices implementing any of the scientific instrument support modules or methods disclosed herein may be part of a scientific instrument support system. FIG. 18 is a block diagram of an example scientific instrument support system 18000 in which some or all of the scientific instrument support methods disclosed herein may be performed, in accordance with various embodiments. The scientific instrument support modules and methods disclosed herein (e.g., the scientific instrument support module 1000 of FIG. 1 and methods 3000-8000 of FIGS. 3-8) may be implemented by one or more of the scientific instrument 18010, the user local computing device 18020, the service local computing device 18030, or the remote computing device 18040 of the scientific instrument support system 18000.

Any of the scientific instrument 18010, the user local computing device 18020, the service local computing device 18030, or the remote computing device 18040 may include any of the embodiments of the computing device 17000 discussed herein with reference to FIG. 17, and any of the scientific instrument 18010, the user local computing device 18020, the service local computing device 18030, or the remote computing device 18040 may take the form of any appropriate ones of the embodiments of the computing device 17000 discussed herein with reference to FIG. 17.

The scientific instrument 18010, the user local computing device 18020, the service local computing device 18030, or the remote computing device 18040 may each include a processing device 18002, a storage device 18004, and an interface device 18006. The processing device 18002 may take any suitable form, including the form of any of the processing devices 17002 discussed herein with reference to FIG. 17, and the processing devices 18002 included in different ones of the scientific instrument 18010, the user local computing device 18020, the service local computing device 18030, or the remote computing device 18040 may take the same form or different forms. The storage device 18004 may take any suitable form, including the form of any of the storage devices 18004 discussed herein with reference to FIG. 17, and the storage devices 18004 included in different ones of the scientific instrument 18010, the user local computing device 18020, the service local computing device 18030, or the remote computing device 18040 may take the same form or different forms. The interface device 18006 may take any suitable form, including the form of any of the interface devices 17006 discussed herein with reference to FIG. 17, and the interface devices 18006 included in different ones of the scientific instrument 18010, the user local computing device 18020, the service local computing device 18030, or the remote computing device 18040 may take the same form or different forms.

The scientific instrument 18010, the user local computing device 18020, the service local computing device 18030, and the remote computing device 18040 may be in communication with other elements of the scientific instrument support system 18000 via communication pathways 18008. The communication pathways 18008 may communicatively couple the interface devices 18006 of different ones of the elements of the scientific instrument support system 18000, as shown, and may be wired or wireless communication pathways (e.g., in accordance with any of the communication techniques discussed herein with reference to the interface devices 17006 of the computing device 17000 of FIG. 17). The particular scientific instrument support system 18000 depicted in FIG. 18 includes communication pathways between each pair of the scientific instrument 18010, the user local computing device 18020, the service local computing device 18030, and the remote computing device 18040, but this "fully connected" implementation is simply illustrative, and in various embodiments, various ones of the communication pathways 18008 may be absent. For example, in some embodiments, a service local computing device 18030 may not have a direct communication pathway 18008 between its interface device 18006 and the interface device 18006 of the scientific instrument 18010, but may instead communicate with the scientific instrument 18010 via the communication pathway 18008 between the service local computing device 18030 and the user local computing device 18020 and the communication pathway 18008 between the user local computing device 18020 and the scientific instrument 18010.

The user local computing device 18020 may be a computing device (e.g., in accordance with any of the embodiments of the computing device 17000 discussed herein) that is local to a user of the scientific instrument 18010. In some embodiments, the user local computing device 18020 may also be local to the scientific instrument 18010, but this need not be the case; for example, a user local computing device 18020 that is in a user's home or office may be remote from, but in communication with, the scientific instrument 18010 so that the user may use the user local computing device 18020 to control and/or access data from the scientific instrument 18010. In some embodiments, the user local computing device 18020 may be a laptop, smartphone, or tablet device. In some embodiments the user local computing device 18020 may be a portable computing device.

The service local computing device 18030 may be a computing device (e.g., in accordance with any of the embodiments of the computing device 17000 discussed herein) that is local to an entity that services the scientific instrument 18010. For example, the service local computing device 18030 may be local to a manufacturer of the scientific instrument 18010 or to a third-party service company. In some embodiments, the service local computing device 18030 may communicate with the scientific instrument 18010, the user local computing device 18020, and/or the remote computing device 18040 (e.g., via a direct communication pathway 18008 or via multiple "indirect" communication pathways 18008, as discussed above) to receive data regarding the operation of the scientific instrument 18010, the user local computing device 18020, and/or the remote computing device 18040 (e.g., the results of self-tests of the scientific instrument 18010, calibration coefficients used by the scientific instrument 18010, the measurements of sensors associated with the scientific instrument 18010, etc.). In some embodiments, the service local computing device 18030 may communicate with the scientific instrument 18010, the user local computing device 18020, and/or the remote computing device 18040 (e.g., via a direct communication pathway 18008 or via multiple "indirect" communication pathways 18008, as discussed above) to transmit data to the scientific instrument 18010, the user local computing device 18020, and/or the remote computing device 18040 (e.g., to update programmed instructions, such as firmware, in the scientific instrument 18010, to initiate the performance of test or calibration sequences in the scientific instrument 18010, to update programmed instructions, such as software, in the user local computing device 18020 or the remote computing device 18040, etc.). A user of the scientific instrument 18010 may utilize the scientific instrument 18010 or the user local computing device 18020 to communicate with the service local computing device 18030 to report a problem with the scientific instrument 18010 or the user local computing device 18020, to request a visit from a technician to improve the operation of the scientific instrument 18010, to order consumables or replacement parts associated with the scientific instrument 18010, or for other purposes.

The remote computing device 18040 may be a computing device (e.g., in accordance with any of the embodiments of the computing device 17000 discussed herein) that is remote from the scientific instrument 18010 and/or from the user local computing device 18020. In some embodiments, the remote computing device 18040 may be included in a datacenter or other large-scale server environment. In some embodiments, the remote computing device 18040 may include network-attached storage (e.g., as part of the storage device 18004). The remote computing device 18040 may store data generated by the scientific instrument 18010, perform analyses of the data generated by the scientific instrument 18010 (e.g., in accordance with programmed instructions), facilitate communication between the user local computing device 18020 and the scientific instrument 18010, and/or facilitate communication between the service local computing device 18030 and the scientific instrument 18010.

In some embodiments, one or more of the elements of the scientific instrument support system 18000 illustrated in FIG. 18 may not be present. Further, in some embodiments, multiple ones of various ones of the elements of the scientific instrument support system 18000 of FIG. 18 may be present. For example, a scientific instrument support system 18000 may include multiple user local computing devices 18020 (e.g., different user local computing devices 18020 associated with different users or in different locations). In another example, a scientific instrument support system 18000 may include multiple scientific instruments 18010, all in communication with service local computing device 18030 and/or a remote computing device 18040; in such an embodiment, the service local computing device 18030 may monitor these multiple scientific instruments 18010, and the service local computing device 18030 may cause updates or other information may be "broadcast" to multiple scientific instruments 18010 at the same time. Different ones of the scientific instruments 18010 in a scientific instrument support system 18000 may be located close to one another (e.g., in the same room) or farther from one another (e.g., on different floors of a building, in different buildings, in different cities, etc.). In some embodiments, a scientific instrument 18010 may be connected to an Internet-of-Things (IoT) stack that allows for command and control of the scientific instrument 18010 through a web-based application, a virtual or augmented reality application, a mobile application, and/or a desktop application. Any of these applications may be accessed by a user operating the user local computing device 18020 in communication with the scientific instrument 18010 by the intervening remote computing device 18040. In some embodiments, a scientific instrument 18010 may be sold by the manufacturer along with one or more associated user local computing devices 18020 as part of a local scientific instrument computing unit 18012.

In some embodiments, different ones of the scientific instruments 18010 included in a scientific instrument support system 18000 may be different types of scientific instruments 18010. In some such embodiments, the remote computing device 18040 and/or the user local computing device 18020 may combine data from different types of scientific instruments 18010 included in a scientific instrument support system 18000.

The following paragraphs provide various examples of the embodiments disclosed herein.

Example 1 includes a scientific instrument support apparatus includes memory hardware configured to store instructions and processing hardware configured to execute the instructions. The instructions include processing metadata to identify extended attributes present in the metadata, loading one or more semantic models based on media type annotations in the metadata, and querying the loaded one or more semantic models for corresponding extended attribute properties that match extended attribute properties in the metadata. The instructions include, in response to finding corresponding extended attribute properties in a selected semantic model of the one or more semantic models: matching each extended attribute property in the metadata to one of one or more corresponding data properties in the selected semantic model, aligning each corresponding data property to a node on an output graph, generating relationships between nodes on the output graph based on object properties in the selected semantic model, testing relationships between nodes on the output graph, removing erroneous relationships from the output graph, and transforming a graphical user interface to display the output graph to a user.

Example 2 includes the subject matter of Example 1 and further specifies that the instructions include, in response to not finding matching extended attribute properties in the metadata: predicting a most likely semantic model from the one or more semantic models and matching each extended attribute property in the metadata to a probable data property in the most likely semantic model.

Example 3 includes the subject matter of Example 2 and further specifies that predicting the most likely semantic model from the one or more semantic models includes: computing a distance between extended attribute properties in the metadata and extended attribute properties in each of the one or more semantic models, computing a total match score for each of the one or more semantic models based on the computed distances, and selecting a semantic model having a highest total match score as the most likely semantic model.

Example 4 includes the subject matter of Example 2 or Example 3 and further specifies that matching each extended attribute property in the metadata to the probable data property in the most likely semantic model includes: determining whether the extended attribute property in the metadata and a probable extended attribute property in the most likely semantic model have a match score above a threshold and, in response to determining that the match between the extended attribute property in the metadata and the probable extended attribute property in the most likely semantic model is above the threshold, matching the extended attribute property in the metadata with the probable extended attribute property in the most likely semantic model.

Example 5 includes the subject matter of any one of Examples 1-4 and further specifies that matching each extended attribute property in the metadata to one of the corresponding data properties in the selected semantic model includes: selecting a data property in the selected semantic model, selecting an extended attribute property from the semantic model based on the selected data property, determining whether a value of the selected extended attribute property is present in the metadata, and in response to determining the value of the selected extended attribute property is present in the metadata, adding the selected data property and an associated extended attribute property from the metadata that corresponds to the value of the selected extended attribute property to an array.

Example 6 includes the subject matter of Example 5 and further specifies that aligning each corresponding data property to the node on an output graph includes: selecting a data property and associated extended attribute property combination from the array and generating the node on the output graph representing the selected data property and extended attribute property combination.

Example 7 includes the subject matter of any one of Examples 1-6 and further specifies that generating relationships between nodes on the output graph based on object properties in the selected semantic model includes: selecting a first node on the output graph, selecting a domain from the semantic model corresponding to the selected node, selecting an object property and a range associated with the domain, checking whether a second node corresponding to the selected range exists, and, in response to determining that the second node exists, generating a link on the output graph extending from the first node to the second node based on the selected object property.

Example 8 includes the subject matter of Example 7 and further specifies that generating relationships between nodes on the output graph based on object properties in the semantic model includes, in response to determining that the second node does not exist, generating the second node on the output graph based on the range.

Example 9 includes the subject matter of any one of Examples 1-8 and further specifies that testing relationships between nodes on the output graph includes: selecting a test node on the output graph, determining whether removal of the selected test node would leave any other nodes on the output graph disconnected, and, in response to determining that removal of the selected test node would not leave any other nodes on the output graph disconnected, marking the selected test node as erroneous.

Example 10 includes the subject matter of Example 9 and further specifies that removing erroneous relationships from the output graph includes removing test nodes marked as erroneous from the output graph.

Example 11 includes the subject matter of any one of Examples 1-10 and further specifies that the instructions include generating data triples based on extended attribute properties in the metadata and corresponding data properties in the selected semantic model and generating nodes and links on the output graph based on the data triples.

Example 12 includes the subject matter of Example 11 and further specifies that each data triple includes a subject, a predicate, and an object, a domain node is generated based on the subject, a range node is generated based on the object, and a link extending from the domain node to the range node is generated based on the predicate.

Example 13 includes a computer-implemented method for scientific instrument support. The method includes processing metadata to identify extended attributes present in the metadata, loading one or more semantic models based on media type annotations in the metadata, querying the loaded one or more semantic models for corresponding extended attribute properties that match extended attribute properties in the metadata, and, in response to finding corresponding extended attribute properties in a selected semantic model of the one or more semantic models: matching each extended attribute property in the metadata to one of one or more corresponding data properties in the selected semantic model, aligning each corresponding data property to a node on an output graph, generating relationships between nodes on the output graph based on object properties in the selected semantic model, testing relationships between nodes on the output graph, removing erroneous relationships from the output graph, and transforming a graphical user interface to display the output graph to a user.

Example 14 includes the subject matter of Example 13 and further specifies that the method includes, in response to not finding matching extended attribute properties in the metadata: predicting a most likely semantic model from the one or more semantic models and matching each extended attribute property in the metadata to a probable data property in the most likely semantic model.

Example 15 includes the subject matter of Example 14 and further specifies that predicting the most likely semantic model from the one or more semantic models includes: computing a distance between extended attribute properties in the metadata and extended attribute properties in each of the one or more semantic models, computing a total match score for each of the one or more semantic models based on the computed distances, and selecting a semantic model having a highest total match score as the most likely semantic model.

Example 16 includes the subject matter of Example 14 or Example 15 and further specifies that matching each extended attribute property in the metadata to the probable data property in the most likely semantic model includes: determining whether the extended attribute property in the metadata and a probable extended attribute property in the most likely semantic model have a match score above a threshold and, in response to determining that the match between the extended attribute property in the metadata and the probable extended attribute property in the most likely semantic model is above the threshold, matching the extended attribute property in the metadata with the probable extended attribute property in the most likely semantic model.

Example 17 includes the subject matter of any one of Examples 13-16 and further specifies that matching each extended attribute property in the metadata to one of the corresponding data properties in the selected semantic model includes: selecting a data property in the selected semantic model, selecting an extended attribute property from the semantic model based on the selected data property, determining whether a value of the selected extended attribute property is present in the metadata, and, in response to determining the value of the selected extended attribute property is present in the metadata, adding the selected data property and an associated extended attribute property from the metadata that corresponds to the value of the selected extended attribute property to an array.

Example 18 includes the subject matter of Example 17 and further specifies that aligning each corresponding data property to the node on an output graph includes: selecting a data property and associated extended attribute property combination from the array and generating the node on the output graph representing the selected data property and extended attribute property combination.

Example 19 includes the subject matter of any one of Examples 13-18 and further specifies that generating relationships between nodes on the output graph based on object properties in the selected semantic model includes: selecting a first node on the output graph, selecting a domain from the semantic model corresponding to the selected node, selecting an object property and a range associated with the domain, checking whether a second node corresponding to the selected range exists, and, in response to determining that the second node exists, generating a link on the output graph extending from the first node to the second node based on the selected object property.

Example 20 includes the subject matter of Example 19 and further specifies that generating relationships between nodes on the output graph based on object properties in the semantic model includes, in response to determining that the second node does not exist, generating the second node on the output graph based on the range.

Example 21 includes the subject matter of any one of Examples 13-20 and further specifies that testing relationships between nodes on the output graph includes: selecting a test node on the output graph, determining whether removal of the selected test node would leave any other nodes on the output graph disconnected, and, in response to determining that removal of the selected test node would not leave any other nodes on the output graph disconnected, marking the selected test node as erroneous.

Example 22 includes the subject matter of Example 21 and further specifies that removing erroneous relationships from the output graph includes removing test nodes marked as erroneous from the output graph.

Example 23 includes the subject matter of any one of Examples 13-22 and further specifies that the method includes generating data triples based on extended attribute properties in the metadata and corresponding data properties in the selected semantic model and generating nodes and links on the output graph based on the data triples.

Example 24 includes the subject matter of Example 23 and further specifies that each data triple includes a subject, a predicate, and an object; a domain node is generated based on the subject; a range node is generated based on the object; and a link extending from the domain node to the range node is generated based on the predicate.

Example 25 includes one or more non-transitory computer-readable media having instructions that, when executed by one or more processors, cause the one or more processors to perform steps comprising: processing metadata to identify extended attributes present in the metadata, loading one or more semantic models based on media type annotations in the metadata, querying the loaded one or more semantic models for corresponding extended attribute properties that match extended attribute properties in the metadata, in response to finding corresponding extended attribute properties in a selected semantic model of the one or more semantic models: matching each extended attribute property in the metadata to one of one or more corresponding data properties in the selected semantic model, aligning each corresponding data property to a node on an output graph, generating relationships between nodes on the output graph based on object properties in the selected semantic model, testing relationships between nodes on the output graph, removing erroneous relationships from the output graph, and transforming a graphical user interface to display the output graph to a user.

## Claims

1. A scientific instrument support apparatus including:
memory hardware configured to store instructions and
processing hardware configured to execute the instructions, wherein the instructions include:
processing metadata to identify extended attributes present in the metadata,
loading one or more semantic models based on media type annotations in the metadata,
querying the loaded one or more semantic models for corresponding extended attribute properties that match extended attribute properties in the metadata,
in response to finding corresponding extended attribute properties in a selected semantic model of the one or more semantic models:
matching each extended attribute property in the metadata to one of one or more corresponding data properties in the selected semantic model,
aligning each corresponding data property to a node on an output graph,
generating relationships between nodes on the output graph based on object properties in the selected semantic model,
testing relationships between nodes on the output graph,
removing erroneous relationships from the output graph, and
transforming a graphical user interface to display the output graph to a user.

2. The scientific instrument support apparatus of claim 1 wherein the instructions include:
in response to not finding matching extended attribute properties in the metadata:
predicting a most likely semantic model from the one or more semantic models and
matching each extended attribute property in the metadata to a probable data property in the most likely semantic model.

3. The scientific instrument support apparatus of claim 2 wherein predicting the most likely semantic model from the one or more semantic models includes:
computing a distance between extended attribute properties in the metadata and extended attribute properties in each of the one or more semantic models;
computing a total match score for each of the one or more semantic models based on the computed distances; and
selecting a semantic model having a highest total match score as the most likely semantic model.

4. The scientific instrument support apparatus of claim 2 wherein matching each extended attribute property in the metadata to the probable data property in the most likely semantic model includes:
determining whether the extended attribute property in the metadata and a probable extended attribute property in the most likely semantic model have a match score above a threshold and
in response to determining that the match between the extended attribute property in the metadata and the probable extended attribute property in the most likely semantic model is above the threshold, matching the extended attribute property in the metadata with the probable extended attribute property in the most likely semantic model.

5. The scientific instrument support apparatus of any one of claims 1-4, wherein matching each extended attribute property in the metadata to one of the corresponding data properties in the selected semantic model includes:
selecting a data property in the selected semantic model;
selecting an extended attribute property from the semantic model based on the selected data property;
determining whether a value of the selected extended attribute property is present in the metadata; and
in response to determining the value of the selected extended attribute property is present in the metadata, adding the selected data property and an associated extended attribute property from the metadata that corresponds to the value of the selected extended attribute property to an array.

6. The scientific instrument support apparatus of claim 5 wherein aligning each corresponding data property to the node on an output graph includes:
selecting a data property and associated extended attribute property combination from the array and
generating the node on the output graph representing the selected data property and extended attribute property combination.

7. The scientific instrument support apparatus of any one of the preceding claims, wherein generating relationships between nodes on the output graph based on object properties in the selected semantic model includes:
selecting a first node on the output graph;
selecting a domain from the semantic model corresponding to the selected node;
selecting an object property and a range associated with the domain;
checking whether a second node corresponding to the selected range exists; and
in response to determining that the second node exists, generating a link on the output graph extending from the first node to the second node based on the selected object property.

8. The scientific instrument support apparatus of claim 7 wherein generating relationships between nodes on the output graph based on object properties in the semantic model includes:
in response to determining that the second node does not exist, generating the second node on the output graph based on the range.

9. The scientific instrument support apparatus of any preceding claim, wherein testing relationships between nodes on the output graph includes:
selecting a test node on the output graph;
determining whether removal of the selected test node would leave any other nodes on the output graph disconnected; and
in response to determining that removal of the selected test node would not leave any other nodes on the output graph disconnected, marking the selected test node as erroneous.

10. The scientific instrument support apparatus of any preceding claim, wherein the instructions include:
generating data triples based on extended attribute properties in the metadata and corresponding data properties in the selected semantic model and
generating nodes and links on the output graph based on the data triples.

11. A computer-implemented method for scientific instrument support including:
processing metadata to identify extended attributes present in the metadata,
loading one or more semantic models based on media type annotations in the metadata,
querying the loaded one or more semantic models for corresponding extended attribute properties that match extended attribute properties in the metadata,
in response to finding corresponding extended attribute properties in a selected semantic model of the one or more semantic models:
matching each extended attribute property in the metadata to one of one or more corresponding data properties in the selected semantic model,
aligning each corresponding data property to a node on an output graph,
generating relationships between nodes on the output graph based on object properties in the selected semantic model,
testing relationships between nodes on the output graph,
removing erroneous relationships from the output graph, and
transforming a graphical user interface to display the output graph to a user.

12. The method of claim 11 further including:
in response to not finding matching extended attribute properties in the metadata:
predicting a most likely semantic model from the one or more semantic models and
matching each extended attribute property in the metadata to a probable data property in the most likely semantic model.

13. The method of claim 12 wherein predicting the most likely semantic model from the one or more semantic models includes:
computing a distance between extended attribute properties in the metadata and extended attribute properties in each of the one or more semantic models;
computing a total match score for each of the one or more semantic models based on the computed distances; and
selecting a semantic model having a highest total match score as the most likely semantic model.

14. The method of claim 12 wherein matching each extended attribute property in the metadata to the probable data property in the most likely semantic model includes:
determining whether the extended attribute property in the metadata and a probable extended attribute property in the most likely semantic model have a match score above a threshold and
in response to determining that the match between the extended attribute property in the metadata and the probable extended attribute property in the most likely semantic model is above the threshold, matching the extended attribute property in the metadata with the probable extended attribute property in the most likely semantic model.

15. A computer program comprising instructions that, when executed by one or more processors, cause the one or more processors to carry out the method steps of any one of claims 11, 12, 13 or 14.
